# EUROPÄISCHE PATENTSCHRIFT

(11) **EP 3 918 136 B1**
(45) Veröffentlichungstag und Bekanntmachung des Hinweises auf die Patenterteilung: **20.09.2023**
(21) Anmeldenummer: 20702791.3
(22) Anmeldetag: 30.01.2020
(51) Int. Cl.: E02D 27/42

(54) **MONOPILEFUNDAMENT**
MONO PILE FOUNDATION
FONDATION PAR UN MONO PIEU

(30) Priorität: 31.01.2019 DE 102019102464
(43) Veröffentlichungstag der Anmeldung: 08.12.2021
(73) Patentinhaber: RWE Offshore Wind GmbH, 45141 Essen (DE)
(72) Erfinder: BIJKERSMA, Niels, 22305 Hamburg (DE); SCHILLER, Christian, 22299 Hamburg (DE); OBERMEYER, Sebastian, 21147 Hamburg (DE)
(74) Vertreter: Cohausz & Florack
(86) Internationale Anmeldenummer: PCT/EP2020/052289
(87) Internationale Veröffentlichungsnummer: WO 2020/157196

(56) Entgegenhaltungen:
- EP-A1- 3 103 924
- US-A1- 2005 083 783

## Beschreibung

Die Erfindung betrifft ein Monopilefundament für ein Offshore-Bauwerk, insbesondere für eine Windkraftanlage, mit einem Gründungspfahl zum Tragen des Bauwerks und einer sich außerhalb an den Gründungspfahl anschließenden und zum nachträglichen Anbringen an dem Gründungspfahl ausgebildeten Gründungsverstärkung, wobei die Gründungsverstärkung eine Manschette, einen Kragen und wenigstens eine Stütze aufweist, wobei die Manschette dem Gründungspfahl zugeordnet und der Kragen über die wenigstens eine Stütze nach außen von der Manschette beabstandet gehalten ist, wobei der Gründungspfahl einen Gründungsabschnitt zum Einbringen in den Meeresboden und einen Verstärkungsabschnitt zum Verbinden des Gründungspfahls mit der Manschette oberhalb des Meeresbodens aufweist und wobei der Kragen und/oder die Manschette zum wenigstens teilweisen Einbringen in den Meeresboden ausgebildet ist. Ferner betrifft die Erfindung eine Monopilefundament-Installation für ein Offshore-Bauwerk, insbesondere für eine Windkraftanlage, mit einem solchen, in einem Meeresboden verankerten Monopilefundament. Des Weiteren betrifft die Erfindung ein Verfahren zum Errichten eines Offshore-Bauwerks, insbesondere für eine Windkraftanlage mit einem solchen Monopilefundament.

Zur Gründung von Offshore-Bauwerken, wie insbesondere Windkraftanlagen, sind unterschiedliche Varianten bekannt. Für Wassertiefen etwa zwischen 4 m und 50 m haben sich insbesondere sogenannte Monopiles, also einzelne Pfähle, als eine wirtschaftliche Lösung herausgestellt. Bei diesem Fundamenttyp handelt es sich meist um einen Gründungspfahl in Form eines Stahlrohrs mit einem Durchmesser von mehreren Metern, das mit seinem offenen Ende in den Meeresboden gerammt oder über ein Vibrationsverfahren in den Meeresboden eingeführt wird. Um eine ausreichende Stabilität des Gründungspfahls zu gewährleisten, der das insbesondere die Windkraftanlage, trägt, wird der Gründungspfahl meist wenigstens mit seiner halben Länge, etwa über 15 m - 50 m, in den Meeresboden getrieben. Dies ist jedoch nur in sandigen oder bindigen Böden mit vertretbarem Aufwand möglich. Für die Errichtung von Offshore-Bauwerken an Stellen, an denen damit zu rechnen ist, dass der Gründungspfahl beim Einbringen in den Meeresboden auf Gestein trifft, wurde durch zusätzliche Maßnahmen versucht, die Einbettungslänge oder Eindringtiefe der Gründungspfähle in den Meeresboden zu verringern, ohne die Steifigkeit des Monopilefundaments signifikant zu beeinträchtigen.

Hierzu ist beispielsweise in der WO 2016/198272 A1 oder auch in der EP 3 103 924 A1 eine Gründungsverstärkung vorgeschlagen worden, die eine außen an dem Gründungspfahl anliegende Manschette und einen teilweise in den Meeresboden eingelassenen Kragen aufweist. Der Kragen und die Manschette werden dabei über Stützen in einem vorbestimmten Abstand zueinander gehalten. Die Gründungsverstärkung bildet somit eine Art Sockel für den in der Manschette aufgenommenen Gründungspfahl, welcher die Steifigkeit des Fundaments erhöht und den Gründungspfahl gegenüber wankenden Bewegungen am Meeresboden abstützt. Daher kann die Einbettungslänge des Gründungspfahls in dem Meeresboden gesenkt werden. Die Errichtung des entsprechenden Monopilefundaments erfolgt, indem zunächst die Gründungsverstärkung mit dem Kragen in den Meeresboden eingetrieben wird. Anschließend wird der Gründungspfahl durch die vom Meeresboden und gegenüber dem Kragen nach oben vorstehende Manschette der Gründungsverstärkung geführt und in den Meeresboden eingetrieben. Dies kann durch Vibration oder durch Rammen erfolgen. Nachdem der Gründungspfahl in den Meeresboden eingetrieben worden ist, wird der Zwischenraum zwischen dem Gründungspfahl und der Manschette ausgegossen. Aber auch Monopilefundamente, die hinreichend tief in sandige Meeresböden eingetrieben werden können und mithin keine Gründungsverstärkung erfordern, können sich mit der Zeit lockern. Ein Gründungspfahl kann sich beispielsweise in Folge von rhythmisch auftretenden Lasten lockern, die durch Wind und/oder Wellen hervorgerufen werden können. Alternativ oder zusätzlich kann die Meeresströmung in der Nähe der Gründungspfähle beschleunigt werden, so dass Meeresboden abgetragen wird und Vertiefungen im Meeresboden, beispielsweise sogenannter Kolks, entstehen. Hier müssen dann Maßnahmen getroffen werden, um die Stabilität des Offshore-Bauwerks weiter zu gewährleisten. Zudem ist es schwierig festzustellen, ob der Gründungspfahl beim Gründen mit der gewünschten Länge in den Meeresboden getrieben werden kann. Selbst bei an sich sandigen und für das Gründen von Monopilefundamenten gut geeigneten Meeresböden kann es vorkommen, dass der Gründungspfahl auf Gestein, beispielweise in Form von Findlingen trifft. Auch ist es denkbar, dass Böden dichter und steifer sind als erwartet und daher das ausgewählte Installationsgerät nicht kraftvoll genug für die Installation ist. Dies kann verhindern, dass die gewünschte Einbettungstiefe des Gründungspfahls im Meeresboden nicht erreicht wird.

Des Weiteren werden Offshore-Bauwerke, wie Windkraftanlagen, nach einiger Zeit wieder abgebaut. Anschließend können dann an gleicher Stelle bedarfsweise neuere und /oder größere Offshore-Bauwerke installiert werden. Für die Installation neuer Offshore-Bauwerke können die bestehenden Monopilefundamente nur bedingt wiederverwendet werden. Oft sind diese nicht mehr stabil genug oder es erfordern neuere und größere Offshore-Bauwerke Monopilefundamente mit einer deutlich höheren Stabilität als die bisherigen Offshore-Bauwerke. Ein weiteres Problem bei der Wiederverwendung von Monopilefundamenten kann die Verkabelung der Monopilefundamente sein, die ein Nachrüsten von Monopilefundamenten mit Gründungsverstärkungen erschweren oder gar unmöglich machen können. So kann es erforderlich sein, die entsprechenden, am Meeresboden verlegten Seekabel zu demontieren und später wieder zu installieren. Bedarfsweise müssen die Seekabel aufgrund einer nachträglich hinzugekommenen Gründungsverstärkung an einer anderen Stelle wieder installiert werden. Selbst wenn die Seekabel zur nachträglichen Installation einer Gründungsverstärkung entfernt werden müssen, kann dies je nach dem bereits vorhandenen Monopilefundament mit unterschiedlich hohem Aufwand verbunden sein.

Entsprechende Seekabel, können beispielsweise als Stromkabel oder zum Transportieren von Informationen ausgebildet sein. Im Falle von Windkraftanlagen wird der erzeugte elektrische Strom abgeleitet. Bei den Seekabeln ist weiter zu beachten, dass diese in bestimmten Höhen über dem Meeresgrund und mit gewissen Mindestradien in das Monopilefundament eingeführt werden müssen, damit es währen des Betriebs des Offshore-Bauwerks auch über viele Jahre hinweg nicht zu unerwünschten Beschädigungen an den Seekabeln kommt.

Mithin ist die Gründung von Monopiles noch nicht in allen Fällen in zufriedenstellender Weise möglich.

Daher liegt der vorliegenden Erfindung die Aufgabe zugrunde, das Monopilefundament, die Monopilefundament-Installation und das Verfahren jeweils der eingangs genannten und zuvor näher erläuterten Art derart auszugestalten und weiterzubilden, dass die Gründung von Monopiles zufriedenstellender erfolgen kann.

Diese Aufgabe ist bei einem Monopilefundament nach dem Oberbegriff des Anspruchs 1 dadurch gelöst, dass im Bereich des Verstärkungsabschnitts eine Durchführungsöffnung im Gründungspfahl vorgesehen ist und dass die Manschette der Gründungsverstärkung die Durchführungsbohrung nicht verschließend im Verstärkungsabschnitt vorgesehen ist.

Die genannte Aufgabe ist ferner gemäß Anspruch 14 gelöst durch eine Monopilefundament-Installation für ein Offshore-Bauwerk, insbesondere für eine Windkraftanlage, mit einem in einem Meeresboden verankerten Monopilefundament nach einem der Ansprüche 1 bis 13 wobei der Gründungspfahl mit seinem Gründungsabschnitt in den Meeresboden eingebracht ist und wobei der Kragen und/oder die Manschette wenigstens teilweise, insbesondere vollständig, in den Meeresboden eingebracht ist.

Des Weiteren wird die zuvor genannte Aufgabe gemäß Anspruch 15 gelöst durch ein Verfahren zum Errichten eines Offshore-Bauwerks, insbesondere für eine Windkraftanlage mit einem Monopilefundament, nach einem der Ansprüche 1 bis 13
- bei dem ein bereits bestehendes Offshore-Bauwerk von einem Gründungspfahl zum Tragen des Bauwerks entfernt und ein neues Offshore-Bauwerk auf dem Gründungspfahl errichtet wird,
- bei dem die Gründungsverstärkung nachträglich an dem bereits teilweise im Meeresboden eingebrachten Gründungspfahl des bereits bestehenden Offshore-Bauwerks angebracht wird und
- bei dem der Kragen und/oder die Manschette der Gründungsverstärkung, vorzugsweise über Vibration, wenigstens teilweise in den Meeresboden eingebracht wird

Wenn die Durchführungsöffnung für ein Seekabel im Bereich des Verstärkungsabschnitts im Gründungspfahl vorgesehen ist, ermöglicht dies eine zweckmäßige und einfache Installation des Seekabels, wobei das Seekabel dann so montiert werden kann, dass auch über lange Zeiträume hinweg keine nachhaltige Beschädigung des Seekabels zu befürchten ist. Dies gilt auch dann, wenn sich die Höhe des Meeresbodens verändert oder eine erhöhte Meeresströmung auf den Gründungspfahl einwirkt. Die nachträglich zu montierende Manschette der Gründungsverstärkung ist ferner so vorgesehen, dass sie die Durchführungsbohrung im Verstärkungsabschnitt nicht verschließt. Auf diese Weise wird erreicht, dass das durch die Durchführungsöffnung geführte Seekabel zum Zwecke der nachträglichen Installation der Gründungsverstärkung nicht deinstalliert werden muss. Die Gründungsverstärkung kann vielmehr bei bestehender Installation des Seekabels nachträglich montiert werden. Alternativ kann zwar eine teilweise Demontage des Seekabels erforderlich sein. Es kann das Seekabel aber unter Verwendung derselben Durchführungsöffnung wieder montiert werden, wobei die Montage zudem mit relativ geringem Aufwand erfolgen kann. Die genannten Vorteile werden zudem auch dann erreicht, wenn bei einem Monopilefundament eine bestehende Gründungsverstärkung nachträglich durch eine andere, insbesondere durch eine größere Gründungsverstärkung ersetzt werden soll.

Um die Montage der Gründungsverstärkung zu vereinfachen kann die Gründungsverstärkung beispielsweise mit einer Öffnung oder Aussparung im Bereich der Durchführungsöffnung im Gründungspfahl versehen sein. Das Seekabel kann dann einerseits durch diese Öffnung oder Aussparung der Gründungsverstärkung und andererseits durch die Durchführungsöffnung im Verstärkungsabschnitt des Gründungspfahls geführt sein. Es ist mithin nicht erforderlich, das Seekabel für die Montage der Gründungsverstärkung komplett zu demontieren und/oder an anderer Stelle erneut zu montieren. Es ist beispielsweise nicht erforderlich, die Durchführungsöffnung für das Seekabel in den Gründungsabschnitt des Gründungspfahls zum Einbringen in den Meeresboden oder in den Bereich des Offshore-Bauwerks oberhalb des Gründungspfahls bzw. oberhalb des Verstärkungsabschnitts des Gründungspfahls zu verlegen, um eine nachträgliche Montage einer Gründungsverstärkung zu ermöglichen.

Der Gründungspfahl des Monopilefundaments ist also mit seinem Gründungsabschnitt in den Meeresboden eingebracht. Zudem ist der Kragen der Gründungsverstärkung wenigstens teilweise in den Meeresboden gesteckt, um die Gründungsverstärkung im Meeresboden abzustützen und das Monopilefundament zu stabilisieren. Der Verstärkungsabschnitt des Gründungspfahls wird oberhalb des Meeresbodens mit der Manschette der Gründungsverstärkung verbunden. Dabei wird eine bevorzugte Lastableitung erreicht, wenn die Manschette in einem Bereich oberhalb des Meeresbodens und bevorzugt zudem auch wenigstens teilweise oberhalb des Kragens angeordnet ist. Im Bereich des Verstärkungsabschnitts ist auch die Durchführungsöffnung vorgesehen. Dabei ist der Verstärkungsabschnitt nicht zwingend auf den Abschnitt des Gründungspfahls beschränkt, an dem tatsächlich die Manschette der Gründungsverstärkung am Gründungspfahl angreift. Der Verstärkungsabschnitt kann vielmehr der Bereich des Gründungspfahls des Monopilefundaments sein, der oberhalb des Gründungsabschnitts angeordnet ist.

Oberhalb des Verstärkungsabschnitts kann sich dann das eigentliche auf das Monopilefundament aufgesetzte Offshore-Bauwerk anschließen.

Bei dem Monopilefundament kann die Manschette und/oder der Kragen vorzugsweise einen kreisförmigen oder ovalen Querschnitt aufweisen. Ein kreisförmiger Querschnitt ermöglicht ein sehr gleichmäßiges Ableiten von Kräften vom Gründungspfahl über die Gründungsverstärkung an den Meeresboden. In einigen Fällen wird es jedoch eine dominierende Wellen- oder Windrichtung geben, so dass die in den Gründungspfahl eingeleiteten Kräfte eine Vorzugsrichtung aufweisen. Dann kann der Einsatz einer Manschette und/oder eines Kragens mit einem ovalen Querschnitt zweckmäßig sein. Dies gilt insbesondere dann, wenn die größere Längenerstreckung des ovalen Querschnitts in der Vorzugsrichtung der in den Gründungspfahl eingeleiteten Kräfte weist. Dabei ist der Querschnitt vorliegend vorzugsweise wenigstens im Wesentlichen in der Horizontalen angeordnet.

In Richtung in einem Querschnitt senkrecht zum Gründungspfahl kann die Manschette und/oder der Kragen alternativ oder zusätzlich ringförmig, zylindrisch oder konisch ausgebildet sein. Auf diese Weise wird eine sehr steife Gründungsverstärkung erhalten werden, die zudem für die Ableitung der Kräfte an den Meeresboden besonders geeignet ist. Welche Form von Manschette und/oder Kragen dabei zu bevorzugen sein wird, ist abhängig von der Art und der Richtung der abzuleitenden Kräfte, von der Art des vom Gründungspfahl getragenen Offshore-Bauwerks und gegebenenfalls von den Fertigungs- und Transportanforderungen.

Um eine zweckmäßige Verstärkung des Gründungspfahls zu erreichen, können die Gründungsverstärkung, die Manschette und/oder der Kragen den Gründungspfahl umfangsseitig über einen Winkelbereich von wenigstens 60°, vorzugsweise von wenigstens 120°, weiter vorzugsweise von wenigstens 180°, insbesondere von wenigstens 260°, umgreifen. Ein Umgreifen des Gründungspfahls in einem geringeren Winkelbereich kann ausreichen, wenn der Gründungspfahl lediglich in bestimmte Richtungen gestützt werden muss. Je größer der entsprechende Winkelbereich ist, umso umfangreicher und in umso mehr Richtungen kann der Gründungspfahl gestützt werden. Dabei kann ein größerer Winkelbereich je nach dem jeweiligen Meeresboden das Einbringen in den Meeresboden in einem vorbestimmten Umfang erschweren oder gar verhindern.

Ein sehr stabiles Monopilefundament zur gleichmäßigen Ableitung von Kräften kann erhalten werden, wenn die Manschette, der Kragen und/oder der Gründungspfahl wenigstens im Wesentlichen konzentrisch zueinander ausgebildet sind. Zudem kann ein stabiler und einfach zu gründender Gründungspfahl erhalten werden, wenn dieser als Hohlprofil ausgebildet ist. Der Einfachheit halber und zur besseren Kraftableitung kann das entsprechende Hohlprofil zylindrisch oder konisch ausgebildet sein, je nach dem jeweiligen Aufstellort und/oder je nach dem jeweiligen, vom Gründungspfahl getragenen Offshore-Bauwerk.

Der besseren Verständlichkeit halber und zur Vermeidung unnötiger Wiederholungen werden nachfolgend das Monopilefundament, die Monopilefundament-Installation und das Verfahren gemeinsam beschrieben, ohne immer jeweils im Einzelnen zwischen dem Monopilefundament, der Monopilefundament-Installation und dem Verfahren zu unterscheiden. Für den Fachmann ergibt sich jedoch anhand des Kontextes, welche Merkmale jeweils in Bezug auf das Monopilefundament, die Monopilefundament-Installation und das Verfahren besonders bevorzugt sind.

In vielen Fällen wird es aus Gründen der Aussteifung zweckmäßig sein, wenn der Kragen wenigstens teilweise in den Meeresboden eingebracht wird, um die Monopilefundament-Installation bereitzustellen. Es kann aber beispielsweise zur weiteren Aussteifung bevorzugt sein, wenn zusätzlich auch die Manschette wenigstens teilweise in den Meeresboden eingebracht wird. Unter Umständen kann es beispielsweise zum Erleichtern des Einbringens der Gründungsverstärkung zweckmäßig sein, wenn nur die Manschette, aber nicht auch der Kragen, wenigstens teilweise in den Meeresboden eingebracht wird.

Bei einer ersten besonders bevorzugten Ausgestaltung des Monopilefundaments ist die Gründungsverstärkung zum Aufschieben auf den Verstärkungsabschnitt des im Meeresboden eingebrachten Gründungspfahls ausgebildet. Auf diese Weises kann die nachträgliche Montage der Gründungsverstärkung erheblich erleichtert werden, dies gilt insbesondere dann, wenn das Offshore-Bauwerk noch nicht auf dem Monopilefundament montiert ist. Bedarfsweise kann auch ein bisheriges Offshore-Bauwerk vom Monopilefundament getrennt worden sein, dann lässt sich die Gründungsverstärkung einfach auf den Verstärkungsabschnitt des Gründungspfahls aufschieben, bevor das neue Offshore-Bauwerk auf dem Gründungspfahl montiert wird. Das Offshore-Bauwerk kann infolge der zwischenzeitlich montierten Gründungsverstärkung bedarfsweise deutlich größer und schwerer ausgebildet sein als das ursprüngliche Offshore-Bauwerk, ohne die Stabilität des Monopilefundaments in Frage zu stellen. Alternativ oder zusätzlich kann der Gründungspfahl aber auch zum Durchstecken durch die Gründungsverstärkung ausgebildet sein. Dann kann beispielsweise zunächst die Gründungsverstärkung in den Meeresboden eingebracht werden, bevor der Gründungspfahl durch die Gründungsverstärkung durchgesteckt wird. Unabhängig davon kann der Gründungspfahl beim Einbringen in den Meeresboden durch die Gründungsverstärkung durchgesteckt werden, um das Bereitstellen der Gründung zu vereinfachen. Dabei ist die Gründungsverstärkung dann wahlweise bereits in den Meeresboden eingebracht oder noch nicht. Der Gründungspfahl kann aber auch durch die Gründungsverstärkung durchgesteckt werden, ohne dass dabei der Gründungspfahl oder die Gründungsverstärkung in den Meeresboden eingebracht ist oder wird.

Alternativ oder zusätzlich kann die Gründungsverstärkung in Umfangsrichtung des Gründungspfahls mehrere, insbesondere zwei, drei oder vier, nebeneinander anzuordnende Verstärkungselemente aufweisen und können die in Umfangsrichtung jeweils zueinander benachbarten Seiten der Verstärkungselemente zum formschlüssigen, gelenkigen und/oder kraftschlüssigen Verbinden untereinander ausgebildet sein. Diese mehrteilige Ausgestaltung der Gründungsverstärkung ermöglicht eine besonders einfache und zuverlässige, nachträgliche Ausrüstung eines Monopilefundaments mit einer Gründungsverstärkung. Durch die mehrteilige Ausbildung der Gründungsverstärkung ist es möglich, die einzelnen Verstärkungselemente nachträglich von außen heranzuführen und die einzelnen Verstärkungselemente anschließend zu einer gemeinsamen Gründungsverstärkung zu verbinden. Dies kann auf unterschiedliche Arten jedoch vorzugsweise formschlüssig, gelenkig und/oder kraftschlüssig erfolgen. Die einzelnen Verstärkungselemente werden beispielsweise in Umfangsrichtung um den Gründungspfahl verteilt nebeneinander angeordnet und somit in einer Richtung senkrecht oder quer zur Längsachse des Gründungspfahls miteinander verbunden. Die Verbindung ist vorzugsweise so vorgesehen, dass die benachbarten Verstärkungselemente sowohl in Umfangsrichtung als auch in radialer Richtung ausgehend von der Längsachse des Gründungspfahls gegeneinander fixiert bzw. arretiert sind. Um den Montageaufwand gering zu halten, ist es in diesem Zusammenhang besonders bevorzugt, wenn lediglich zwei, drei oder vier Verstärkungselemente vorgesehen und miteinander zu einer Gründungsverstärkung gefügt werden. Die Gründungsverstärkung setzt sich dabei aus in Umfangsrichtung um den Gründungspfahl verteilt angeordneten und in Umfangsrichtung einander benachbarten Verstärkungselementen zusammen. Die Verstärkungselemente sind dabei an in Umfangsrichtung jeweils zueinander benachbarten Seiten der jeweils benachbarten Verstärkungselemente formschlüssig, gelenkig und/oder kraftschlüssig miteinander verbunden.

Durch die mehrteilige Ausgestaltung der Gründungsverstärkung werden die Vorteile des Monopilefundaments und der Monopilefundament-Installation in besonderem Maße genutzt, wenn der Gründungspfahl mit dem Gründungsabschnitt in den Meeresboden eingebracht wird und erst nachträglich in Umfangsrichtung des Gründungspfahls die Kragen mehrerer, insbesondere von zwei, drei oder vier, Verstärkungselementen nacheinander oder gemeinsam und wenigstens teilweise in den Meeresboden eingebracht werden. Dabei kann das Einlassen des Gründungspfahls und/oder der Verstärkungselemente bevorzugt im Vibrationsverfahren oder durch Impulsrammung erfolgen. Der Gründungspfahl und/oder die Verstärkungselemente können alternativ auch in den Meeresboden eingespült oder auf sonstige Weise in den Meeresboden eingelassen werden. Der Montageaufwand kann weiter reduziert werden, wenn die Verstärkungselemente durch das wenigstens teilweise Einbringen in den Meeresboden nacheinander nebeneinander positioniert und die jeweils zueinander benachbarten Seiten der angrenzenden Verstärkungselemente formschlüssig und/oder kraftschlüssig miteinander verbunden werden. Dabei ist es besonders einfach und zweckmäßig, wenn die jeweils zueinander benachbarten Verstärkungselemente durch das wenigstens teilweise Einbringen in den Meeresboden miteinander verbunden werden.

Der Montageaufwand kann auch dadurch weiter reduziert werden, wenn die Verstärkungselemente bereits vor dem Einbringen in den Meeresboden zueinander positioniert, insbesondere miteinander verbunden werden. Bedarfsweise können die jeweils zueinander benachbarten Seiten der angrenzenden Verstärkungselemente formschlüssig und/oder kraftschlüssig miteinander verbunden werden. Besonders einfach und zweckmäßig ist es jedoch alternativ oder zusätzlich, wenn jeweils zueinander benachbarte Verstärkungselemente an den einander zugewandten Seiten gelenkig miteinander verbunden werden. Im Falle einer gelenkigen Verbindung ist es beispielsweise möglich, ein Verstärkungselement an den Gründungspfahl anzulegen und ein weiteres Verstärkungselement um das entsprechende Gelenk so zu schwenken, dass auch das weitere Verstärkungselement an den Gründungspfahl angelegt wird. Dabei bietet es sich besonders an, wenn die gelenkige Verbindung bzw. die Schwenkverbindung eine Schwenkachse definiert, die wenigstens überwiegend oder wenigstens im Wesentlichen parallel zur Längsachse des Gründungspfahls ausgerichtet ist. Die Verstärkungselemente bleiben also auch beim Schwenken gegeneinander bedarfsweise wenigstens im Wesentlichen in einer gemeinsamen Ebene senkrecht zur Längserstreckung des Gründungspfahls. Auf diese Weise wird einfach ermöglicht, die Verstärkungselemente um mehr als 180° um den Gründungspfahl herumzulegen und dies bereits vor dem Einbringen der Verstärkungselemente in den Meeresboden zu bewerkstelligen. Dies kann nämlich das Einbringen der Verstärkungselemente in den Meeresboden vereinfachen. Sind die Verstärkungselemente bereits vor dem Einbringen in den Meeresboden fest miteinander verbunden, sei es formschlüssig, gelenkig und/oder kraftschlüssig, kann vermieden werden, dass die Verbindung der Verstärkungselemente untereinander beim Einbringen in den Meeresgrund oder durch das Einbringen in den Meeresgrund versehentlich nicht wie gewünscht verbunden werden können.

Um den modularen Aufbau ebenso zu vereinfachen wie das Einbringen der Verstärkungselemente nacheinander in den Meeresboden bietet es sich an, wenn jedes der Verstärkungselemente ein Manschettenelement der Manschette, ein Kragenelement des Kragens und wenigstens ein Stützenelement der Stütze aufweist. So kann die Gründungsverstärkung beispielsweise auch durch gleichartige Verstärkungselemente gebildet werden. Die Verwendung von Gleichteilen ist nicht nur einfacher, sondern fertigungstechnisch auch kostengünstiger.

Zudem kann die Montage der Gründungsverstärkung vereinfacht werden, wenn die in Umfangsrichtung jeweils zueinander benachbarten Seiten der Manschettenelemente, Kragenelemente und/oder Stützenelemente untereinander zum formschlüssigen, gelenkigen und/oder kraftschlüssigen Verbinden ausgebildet sind. Dies führt auch zu einer Verringerung des Fertigungsaufwands der Gründungsverstärkung insgesamt.

Um eine zuverlässige Abstützung des Gründungspfahls an der Gründungsverstärkung zu erreichen, welche die Übertragung hoher Kräfte erlaubt, kann eine Groutverbindung vorgesehen werden. Zu diesem Zweck kann zwischen der Manschette, insbesondere zwischen den Manschettenelementen, und der Außenseite des Verstärkungsabschnitts des Gründungspfahls ein Spalt vorgesehen sein, der dann mit einer Vergussmasse ausgegossen werden kann. Hierzu bietet sich insbesondere ein sogenanntes Grout an, bei dem es sich um einen Spezialbeton, bzw. Zementleim oder Zementmörtel zum Füllen von Spalten handelt, insbesondere zum Verbinden von konzentrischen, über einen Spalt voneinander beabstandeten Stahlrohren einer Windkraftanlage. Es sind Grouts mit unterschiedlichen Zusammensetzungen am Markt bekannt. Vergussmassen können auch Vergussmörtel sein. Bei einem Grout handelt es sich beispielsweise um einen hochfesten Vergussbeton, der in unterschiedlichen Zusammensetzungen bekannt ist. Da bei Offshore-Windkraftanlagen, wenn auch an anderer Stelle, insbesondere in der Verbindung zwischen dem Gründungspfahl und dem Turm der Windkraftanlage oberhalb des Wasserspiegels, Groutverbindungen bekannt sind, werden die vorliegenden Verbindungen auch als Groutverbindungen bezeichnet, obwohl grundsätzlich auch andere Vergussmassen zur Bildung der Verbindung als ein Grout in Frage kommen können, beispielsweise Stahlfaserbeton oder zementfreie Bentonitsuspensionen.

Insbesondere um einen radial geschlossenen Spalt zu erhalten, der mit einer Vergussmasse, insbesondere einem Grout, gefüllt werden kann, bietet es sich an, wenn wenigstens zwei benachbarte Manschettenelemente benachbarter Verstärkungselemente in Umfangsrichtung zum abschnittsweisen Überlappen ausgebildet sind.

Eine stabile und zudem steife Ausgestaltung der Gründungsverstärkung kann erhalten werden, wenn die wenigstens eine Stütze, insbesondere das wenigstens eine Stützenelement, in Form einer Rippe oder Strebe ausgebildet ist. Auf diese Art lassen sich auch besonders zuverlässig Kräfte in radialer Richtung ableiten, und zwar insbesondere dann, wenn die Rippe oder Strebe sich in radialer Richtung erstreckt. Dabei können die jeweils angrenzenden Stützenelemente benachbarter Verstärkungselemente auch zum formschlüssigen, gelenkigen und/oder kraftschlüssigen Ineinandergreifen ausgebildet sein, so dass eine einfache Verbindung der benachbarten Verstärkungselemente untereinander erreicht werden kann. Das formschlüssige Ineinandergreifen der Stützenelemente wird besonders einfach und zuverlässig dadurch erreicht, dass ein Stützenelement wenigstens einen Hakenabschnitt aufweist und dass das zugeordnete Stützenelement des benachbarten Verstärkungselements wenigstens einen Eingreifabschnitt aufweist, der in den Hakenabschnitt des angrenzenden Stützenelements eingreift.

Des Weiteren bietet es sich an, wenn die angrenzenden Manschettenelemente wenigstens im Bereich von wenigstens einer Durchführungsöffnung im Gründungspfahl voneinander beabstandet angeordnet sind. So wird vermieden, dass es zu einer Beschädigung der wenigstens einen Leitung und/oder des wenigstens einen Kabels durch die Gründungsverstärkung kommt. Dies bedeutet nicht, dass die angrenzenden Manschettenelemente sich nicht abschnittsweise berühren können und auch nicht, dass die angrenzenden Manschettenelemente nicht miteinander verbunden sein können. Dies sollte dann aber in anderen Bereichen der Fall sein als im Bereich der wenigstens einen Durchführungsöffnung. Alternativ oder zusätzlich kann an den Stellen, an denen Kabel zum Gründungspfahl geführt werden, auch jeweils eine Aussparung im Kragen vorgesehen sein. Es sind aber auch Ausgestaltungen denkbar, bei denen die angrenzenden Verstärkungselemente, Manschettenelemente, Kragenelemente und/oder Stützenelemente untereinander unverbunden sind. Möglich ist auch, in den entsprechenden Bereichen der Durchführung auf ein Grout und/oder Vergussmasse zwischen der Manschette und dem Gründungspfahl zu verzichten.

Beispielsweise um ein Wegspülen von Meeresboden im Bereich des Monopilefundaments zu vermeiden, kann die Stütze als eine den radialen Spalt zwischen der Manschette und dem Kragen wenigstens im Wesentlichen verschließende Ringscheibe ausgebildet sein. Ein Austrag von Sediment aus dem inneren Bereich des Kragens oder das Bilden von einem Kolk kann so verhindert werden. Für eine einfache modulare Ausgestaltung der Gründungsverstärkung können die Stützenelemente als Ringscheibenelemente der Ringscheibe ausgebildet sein. Für eine zusätzliche Aussteifung der Gründungsverstärkung kann alternativ oder zusätzlich auch der Raum zwischen dem Kragen und dem Gründungspfahl unterhalb der Ringscheibe wenigstens im Wesentlichen mit einer Vergussmasse, insbesondere mit Grout, ausgefüllt sein.

Um ein einfaches und kostengünstiges Ausgießen von Freiräumen mit Grout oder einer anderen Vergussmasse zu erreichen, kann die Manschette, insbesondere wenigstens ein Manschettenelement, und/oder die Stütze, insbesondere ein Stützenelement, wenigstens einen Groutanschluss zum Verbinden mit einer Groutleitung und Zuführen von Grout oder einer anderen Vergussmasse aufweisen. Die Lage des Groutanschlusses kann danach gewählt werden, welcher Freiraum mit einer Vergussmasse, insbesondere einem Grout, ausgefüllt werden soll.

Um ein einfaches und kostengünstiges Ausgießen von Freiräumen mit einer Vergussmasse, insbesondere einem Grout, zu erreichen, kann alternativ oder zusätzlich der Gründungspfahl im Inneren eine Groutleitung aufweisen. Dies gilt insbesondere dann, wenn die Groutleitung mit dem wenigstens einen Groutanschluss verbunden ist.

Um die Installation der Gründungsverstärkung zu vereinfachen, ohne das Seekabel vollständig demontieren zu müssen, kann die Manschette ein in Überdeckung mit der Durchführungsöffnung im Gründungspfahl vorgesehenes Langloch zur Durchführung eines Seekabels aufweisen. Das Seekabel muss dann zur Montage der Gründungsverstärkung beispielsweise nur an einer ohnehin trennbaren Verbindung getrennt werden. Nach der Montage der Gründungverstärkung kann dann das Seekabel durch das Langloch geführt und wieder mit der entsprechenden Verbindung verbunden werden. Dabei bietet es sich grundsätzlich an, wenn das Langloch wenigstens im Wesentlichen parallel zur Längsachse des Gründungspfahls ausgerichtet ist. So ist es unproblematisch, wenn die Gründungsverstärkung etwas weiter oder weniger weit in den Meeresboden eingebracht wird, weil der Meeresboden im Bereich des Kragens beispielsweise weicher oder härter ist als angenommen.

Alternativ oder zusätzlich kann die Manschette im Bereich der Durchführungsöffnung im Gründungspfahl sowie darunter umfangsseitig ausgespart sein. Die Gründungsverstärkung kann dann bei richtiger umfangsseitiger Ausrichtung gegenüber dem Gründungspfahl und dem bereits verlegten Seekabel über den Gründungspfahl aufgeschoben werden. Das Seekabel wird dann in der entsprechenden Aussparung in der Manschette aufgenommen, ohne dabei beschädigt zu werden. Dabei kann es sich grundsätzlich ergänzend anbieten, wenn die Manschette oberhalb der Durchführungsöffnung im Gründungspfahl umfangsseitig geschlossen ist. Dadurch muss eine Beschädigung des Seekabels nicht befürchtet werden und kann das Monopilefundament insgesamt ausgesteift werden.

Zudem kann auch der Kragen wenigstens unterhalb der Durchführungsöffnung im Gründungspfahl umfangsseitig ausgespart sein. Die Gründungsverstärkung kann dann ebenfalls bei richtiger umfangsseitiger Ausrichtung gegenüber dem Gründungspfahl und dem bereits verlegten Seekabel über den Gründungspfahl aufgeschoben werden, wobei das Seekabel dann in der entsprechenden Aussparung des Kragens aufgenommen wird, ohne dabei beschädigt zu werden. Sollte der Kragen nicht zu weit in den Meeresboden eingebracht werden, kann es sich zur Aussteifung der Gründungsverstärkung selbst anbieten, wenn der Kragen trotz der entsprechenden Ausnehmung, und zwar darüber, umfangsseitig geschlossen ist.

Um die Montage der Gründungsverstärkung bei bereits montiertem Seekabel zu ermöglichen, die Gründungsverstärkung aber nicht unnötig zu schwächen, kann die Manschette in einem Bereich unterhalb der Durchführungsöffnung im Gründungspfahl umfangsseitig einen von einer Montagestellung in eine Verstärkungsstellung und zurück verstellbaren Montageabschnitt aufweisen, wobei bei dem Montageabschnitt in der Montagestellung die Durchführungsöffnung im Gründungspfahl vom Meeresboden in einer Richtung wenigstens im Wesentlichen parallel zur Längsachse des Gründungspfahls frei zugänglich ist. In der Montagestellung des Montageabschnitts kann die Manschette also über die Durchführungsöffnung geschoben werden, ohne dass es zu einer Beschädigung des durch die Durchführungsöffnung geführten Seekabels kommen kann. Damit zudem die Manschette nach der Montage der Gründungsverstärkung unterhalb der Durchführungsöffnung nicht nachhaltig geschwächt bleibt, kann es zweckmäßig sein, wenn der Montageabschnitt in der Verstärkungsstellung mit zwei umfangsseitig gegenüberliegenden Manschettenelementen verbunden ist, insbesondere die Manschette umfangsseitig zwischen den beiden umfangsseitig gegenüberliegenden Manschettenelementen schließt. So kann die Manschette durch Verstellen des Montageabschnitts nach dem Montieren der Gründungsverstärkung in die Verstärkungsstellung ausgesteift werden, ohne dass dadurch die Führung des Seekabels beeinträchtigt wäre.

Um die Montage der Gründungsverstärkung bei bereits montiertem Seekabel zu ermöglichen, die Gründungsverstärkung aber nicht unnötig zu schwächen, kann alternativ oder zusätzlich auch der Kragen umfangsseitig einen von einer Montagestellung in eine Verstärkungsstellung und zurück verstellbaren Montageabschnitt aufweisen, wobei der Montageabschnitt in der Montagestellung eine vom Meeresboden in eine Richtung wenigstens im Wesentlichen parallel zur Längsachse des Gründungspfahls frei zugängliche Öffnung im Kragen bildet. In dieser durch den Montageabschnitt in der Montagestellung gebildeten Öffnung im Kragen kann dann das bereits verlegte Seekabel aufgenommen werden, ohne dass es bei der nachträglichen Montage der Gründungsverstärkung zu einer Beschädigung des Seekabels kommt. Damit diese Öffnung aber nicht zu einer nachhaltigen und dauerhaften Schwächung des Kragens und damit der Gründungsverstärkung führt, kann vorzugsweise der Montageabschnitt in der Verstärkungsstellung mit zwei umfangsseitig gegenüberliegenden Kragenelementen verbunden sein. Dadurch wird dann bedarfsweise der Kragen umfangsseitig zwischen den beiden umfangsseitig gegenüberliegenden Kragenelementen geschlossen, was zu einer erheblichen Versteifung der Gründungsverstärkung führt. Dabei kann der Montageabschnitt oberhalb des Seekabels und im installierten Zustand oberhalb des Meeresbodens angeordnet sein. Alternativ oder zusätzlich kann der Montageabschnitt des Kragens aber auch unterhalb des Seekabels vorgesehen und bedarfsweise im installierten Zustand wenigstens teilweise im Meeresboden eingebracht sein. Im letztgenannten Fall, wird der Montageabschnitt des Kragens vorzugsweise vor dem Einbringen des Kragens in den Meeresboden von der Montagestellung in die Verstärkungsstellung verstellt.

Um die Verstellung des Montageabschnitts der Manschette und/oder des Kragens konstruktiv einfach zu ermöglichen und einfach herbeiführen zu können, bietet es sich an, wenn der Montageabschnitt der Manschette und/oder der Montageabschnitt des Kragens zum Verstellen von der Montagestellung in die Verstärkungsstellung und zurück schwenkbar, klappbar und/oder faltbar ausgebildet ist. Der Montageabschnitt kann so einfach gehandhabt werden. Unabhängig davon ist es aber auch bevorzugt, wenn der Montageabschnitt der Manschette und/oder der Montageabschnitt des Kragens in der Montagestellung wenigstens an einem umfangsseitig angrenzenden Manschettenelement, einem umfangsseitig angrenzenden Kragenelement und/oder eines in Umfangsrichtung angrenzenden Stützelements festgelegt ist. Eine derartige Festlegung führt zu einer nachhaltigen und ausgeprägten Aussteifung der Gründungsverstärkung und damit des Monopilefundaments.

Zweckmäßig kann es nicht nur aus konstruktiver Sicht, sondern auch aus Gründen der Aussteifung der Gründungsverstärkung sein, wenn wenigstens eine Stütze oder wenigstens ein Stützenelement so ausgebildet wird, dass sie bei der Montage der Gründungsverstärkung das bereits verlegte Seekabel aufnehmen kann. Dies kann erfolgen, indem wenigstens eine Stütze oder wenigstens ein Stützenelement eine sich wenigstens im Wesentlichen radial zum Gründungspfahl erstreckende, insbesondere als Aussparung der Stütze oder als Kanal in der Stütze oder dem Stützenelement ausgebildete, Kabelaufnahme zur Aufnahme des sich durch die Durchführungsöffnung im Gründungspfahl erstreckenden Seekabels aufweist. Dabei bietet es sich konstruktiv an, wenn die Kabelaufnahme vom Meeresboden in einer Richtung wenigstens im Wesentlichen parallel zur Längsachse des Gründungspfahls frei zugänglich vorgesehen ist. Dann kann die Gründungsverstärkung auf den Gründungspfahl aufgeschoben werden, auch wenn das Seekabel bereits montiert worden ist.

Insbesondere in den Fällen, in denen zur Aufnahme oder zur Durchführung des bereits verlegten Seekabels eine Aussparung oder Öffnung in der Gründungsverstärkung vorgesehen wird, kann es zweckmäßig sein, die sich daraus ergebende Schwächung der Gründungsverstärkung auszugleichen. Dies kann bevorzugt erfolgen, indem in Umfangsrichtung zwischen wenigstens zwei angrenzenden Stützenelementen und in radialer Richtung zwischen der Manschette und dem Kragen ein mit den wenigstens zwei angrenzenden Stützenelementen verbundenes Aussteifungselement vorgesehen ist. Dieses Aussteifungselement kommt also primär zur Aussteifung der Gründungsverstärkung hinzu, wobei das Aussteifungselement beispielsweise das Flächenträgheitsmoment der Gründungsverstärkung steigern kann. Die Verwendung des Aussteifungselements kann dann besonders zweckmäßig sein, wenn die Manschette zwischen den wenigstens zwei angrenzenden Stützenelementen eine geringere Erstreckung wenigstens im Wesentlichen parallel zur Längsachse des Gründungspfahls als die angrenzenden Bereiche der Manschette aufweist. Diese geringere Erstreckung kann dann zur Durchführung des Seekabels benutzt werden. Die dortige Schwächung der Manschette wird dann bedarfsweise angrenzend durch das Aussteifungselement kompensiert.

Konstruktiv einfach und funktional zweckmäßig kann es in Zusammenhang mit dem Aussteifungselement sein, wenn die Erstreckung der Manschette zwischen den wenigstens zwei angrenzenden Stützenelementen gegenüber den angrenzenden Bereichen der Manschette jeweils wenigstens im Wesentlichen parallel zur Längsachse des Gründungspfahls wenigstens im Wesentlichen um einen Betrag geringer ist, der wenigstens im Wesentlichen der Erstreckung des Aussteifungselements wenigstens im Wesentlichen parallel zur Längsachse des Gründungspfahls entspricht. So kann beispielsweise das Aussteifungselement wenigstens im Wesentlichen die Abmessungen bzw. die Fläche von dem Teil der Manschette aufweisen, der angrenzend bei der Manschette ausgespart worden ist, um die Durchführung oder Aufnahme des Seekabels zu ermöglichen. So wird beispielsweise erreicht, dass etwa die Schwächung der Manschette durch die Verstärkung der Gründungsverstärkung durch das Verstärkungselement ausgeglichen wird.

Wenn wenigstens eine Stütze oder wenigstens ein Stützenelement eine Kabelführung zum Führen des Seekabels in Richtung der Durchführungsöffnung aufweist, kann das Seekabel über die Kabelführung bis zur Durchführungsöffnung des Gründungspfahls oder in dessen Nähe geführt werden. So wird vermieden, dass das Seekabel geknickt oder anderweitig beschädigt wird. Das Seekabel kann auch reproduzierbar verlegt und vor der Einwirkung erheblicher äußerer Kräfte geschützt werden. Dabei bietet es sich insbesondere an, wenn die Kabelführung einen quer zu dem zu führenden Seekabel einen rinnenartigen, insbesondere U-förmigen oder V-förmigen Querschnitt aufweist, in dem das Seekabel wenigstens abschnittsweise aufgenommen werden kann. Konstruktiv lässt sich das einfach erreichen, wenn die Kabelführung wenigstens im Wesentlichen von der Schulter, also beispielsweise dem oberen Rand, der Stütze oder des Stützelements und zwei sich seitlich anschließenden Flankenelementen gebildet wird. Diese Flankenelemente können sich dann von der Schulter der Stütze oder des Stützelements aus nach oben, bedarfsweise schräg nach oben, erstrecken.

Um den Spalt zwischen dem Gründungspfahl und der Manschette mit einer Vergussmasse, wie beispielsweise einem Grout, besser ausgießen zu können, um die Stabilität der Monopilefundament-Installation und das Ableiten der Kräfte verbessern zu können, ist es bedarfsweise zweckmäßig, wenn der Manschette angrenzend zur Aussparung in der Manschette eine Kühlmittelleitung zugeordnet ist. Dabei ist die Kühlmittelleitung vorzugsweise so ausgebildet, dass Meerwasser einerseits in einem Spalt zwischen dem Verstärkungsabschnitt des Gründungspfahls und der Manschette der Gründungsverstärkung und andererseits in einem Bereich angrenzend zur Aussparung ausgefroren werden kann, so dass das Eis den Spalt lokal abdichtet.

Bei einer ersten besonders bevorzugten Ausgestaltung des Verfahrens ist vorgesehen, dass in Umfangsrichtung des Gründungspfahls die Kragen mehrerer, insbesondere von zwei, drei oder vier, Verstärkungselemente, vorzugsweise über Vibration, wenigstens teilweise in den Meeresboden eingebracht werden, dass anschließend die Verstärkungselemente durch das wenigstens teilweise Einbringen in den Meeresboden, insbesondere nacheinander, oder vor dem wenigstens teilweisen Einbringen in den Meeresboden nebeneinander positioniert werden, dass die jeweils zueinander benachbarten Seiten der angrenzenden Verstärkungselemente, vorzugsweise durch das wenigstens teilweise Einbringen in den Meeresboden oder vor dem wenigstens teilweisen Einbringen in den Meeresboden, formschlüssig, gelenkig und/oder kraftschlüssig miteinander verbunden werden und dass der Verstärkungsabschnitt des Gründungspfahls oberhalb des Meeresbodens mit der Manschette der Gründungsverstärkung verbunden wird. Auf diese Weise kann einfach und effizient eine nachträgliche Ausrüstung eines Monopilefundaments mit einer Gründungsverstärkung immer dann erfolgen, wenn dies aus den jeweiligen Gründen des Einzelfalls angezeigt ist.

Des Weiteren bietet es sich an, dass in Umfangsrichtung jeweils zueinander benachbarter Seiten der Manschettenelemente, Kragenelemente und/oder Stützenelemente untereinander, vorzugsweise durch das wenigstens teilweise Einbringen in den Meeresboden oder vor dem wenigstens teilweisen Einbringen in den Meeresboden, formschlüssig, gelenkig und/oder kraftschlüssig verbunden werden. So lassen sich besonders zweckmäßig die jeweiligen Verstärkungselemente verbinden. Die wenigstens zwei benachbarten Manschettenelemente benachbarter Verstärkungselemente können dabei in Umfangrichtung, insbesondere zur Bildung einer in radialer Richtung geschlossenen Manschette, abschnittsweise überlappend positioniert werden. Dies begünstigt die Anbindung an den Gründungspfahl und damit das Abstützen des Gründungspfahls. Dies erlaubt es, den modularen Aufbau ebenso zu vereinfachen wie das Einbringen der Verstärkungselemente nacheinander in den Meeresboden.

Wenn die Manschette, insbesondere die Manschettenelemente, mit der über einen Spalt beabstandeten Außenseite des Verstärkungsabschnitts des Gründungspfahls über eine in den Spalt eingebrachte Vergussmasse, insbesondere Grout, verbunden wird, kann eine langlebige Verbindung erreicht und können große Kräfte abgeleitet werden. Alternativ oder zusätzlich können die angrenzenden Manschettenelemente im Bereich von wenigstens einer Durchführungsöffnung im Gründungspfahl voneinander beabstandet angeordnet werden. So wird ein einfaches und beschädigungsfreies Durchführen etwa von Seekabeln in den Gründungspfahl hinein bzw. hinaus sichergestellt. Unabhängig davon können angrenzende Stützenelemente benachbarter Verstärkungselemente, insbesondere über wenigstens einen Hakenabschnitt und wenigstens einen Eingreifabschnitt, jeweils formschlüssig ineinander gefügt werden, um ein einfaches und zudem funktionales Fügen zu ermöglichen.

Vorzugsweise ist der Raum zwischen dem Kragen und dem Gründungspfahl unterhalb der Ringscheibe wenigstens im Wesentlichen mit einer Vergussmasse, insbesondere einem Grout, ausgefüllt, um die Gründungsverstärkung weiter aussteifen und/oder größere Kräfte von dem Gründungspfahl in den Meeresboden ableiten zu können.

Alternativ oder zusätzlich kann eine Vergussmasse, insbesondere ein Grout, über einen Groutanschluss in der Manschette, insbesondere in wenigstens einem Manschettenelement, und/oder in der Stütze, insbesondere in wenigstens einem Stützenelement, zugeführt werden. So kann der entsprechende Freiraum sehr einfach, zuverlässig und schnell ausgegossen werden. Dies ist insbesondere dann der Fall, wenn die Vergussmasse, insbesondere das Grout, über eine Groutleitung zugeführt wird. Diese kann außerhalb des Gründungspfahls verlaufen. Bevorzugt kann es jedoch sein, wenn die Groutleitung im Inneren des Gründungspfahls verläuft. Dies vereinfacht den Anschluss der Groutleitung und schützt diese vor äußerer Beschädigung.

Zur Vereinfachung der Erstellung einer Monopile-Installation kann die Gründungsverstärkung auf den Verstärkungsabschnitt des Gründungspfahls aufgeschoben und/oder kann der Gründungspfahl durch die Gründungsverstärkung durchgesteckt werden. Dies kann erfolgen, bevor die Gründungsverstärkung und der Gründungspfahl in den Meeresboden eingebracht worden ist. In vielen Fällen wird es aber bevorzugt oder gegeben sein, dass die Gründungsverstärkung oder der Gründungspfahl bereits in den Meeresboden eingebracht worden ist. Dann kann sehr einfach die Gründungsverstärkung zum Einbringen derselben in den Meeresboden auf den Verstärkungsabschnitt des Gründungspfahls aufgeschoben werden oder es kann der Gründungspfahl beim Einbringen in den Meeresboden durch den Gründungspfahl gesteckt werden.

Zum zuverlässigen Vergießen des Spalts zwischen dem Gründungspfahl und der Manschette kann es zweckmäßig sein, wenn ein Kühlmittel durch wenigstens eine Kühlleitung geleitet wird. So kann bedarfsweise Meerwasser zu Eis gefroren werden, und zwar einerseits in einem Spalt zwischen dem Verstärkungsabschnitt des Gründungspfahls und der Manschette der Gründungsverstärkung und andererseits in einem Bereich angrenzend zur Aussparung. Die Aussparung ist dann mehr oder weniger abgedichtet, so dass die Vergussmasse bzw. das Grout nicht aus der Aussparung austreten kann, während die Vergussmasse bzw. das Grout noch nicht ausgehärtet ist. Dazu ist es zweckdienlich, wenn die wenigstens eine Kühlmittelleitung einer Aussparung in der Manschette zugeordnet ist.

Nachfolgend wird die Erfindung anhand einer lediglich Ausführungsbeispiele darstellenden Zeichnung näher erläutert. In der Zeichnung zeigt
- Fig. 1: eine Offshore-Windkraftanlage mit einem ersten erfindungsgemäßen Monopilefundament und einer ersten erfindungsgemäßen Monopilefundament-Installation in einer schematischen Seitenansicht,
- Fig. 2: ein Detail der Offshore-Windkraftanlage im Bereich der Monopilefundament-Installation in einer perspektivischen Ansicht,
- Fig. 3: eine schematische Darstellung des Verfahrens zur Herstellung des Monopilefundaments und der Monopilefundament-Installation aus Fig. 1 in einer schematischen Darstellung,
- Fig. 4: ein Detail der Monopilefundament-Installation in einer Draufsicht,
- Fig. 5: das Detail der Offshore-Windkraftanalage aus Fig. 1 in einer horizontalen Schnittansicht,
- Fig. 6A-B: ein Detail eines zweiten erfindungsgemäßen Monopilefundaments und einer zweiten erfindungsgemäßen Monopilefundament-Installation in einer zusammengebauten Stellung und in einer Stellung während der Herstellung jeweils in einer perspektivischen Ansicht,
- Fig. 7: ein Detail eines dritten erfindungsgemäßen Monopilefundaments und einer dritten erfindungsgemäßen Monopilefundament-Installation in einer perspektivischen Ansicht,
- Fig. 8: ein Detail eines vierten erfindungsgemäßen Monopilefundaments und einer vierten erfindungsgemäßen Monopilefundament-Installation in einer perspektivischen Ansicht,
- Fig. 9: ein Detail eines fünften erfindungsgemäßen Monopilefundaments und einer fünften erfindungsgemäßen Monopilefundament-Installation in einer perspektivischen Ansicht,
- Fig. 10: ein Detail eines sechsten erfindungsgemäßen Monopilefundaments und einer sechsten erfindungsgemäßen Monopilefundament-Installation in einer perspektivischen Ansicht,
- Fig. 11: ein Detail eines siebten erfindungsgemäßen Monopilefundaments und einer siebten erfindungsgemäßen Monopilefundament-Installation in einer perspektivischen Ansicht,
- Fig. 12: ein Detail eines achten erfindungsgemäßen Monopilefundaments und einer achten erfindungsgemäßen Monopilefundament-Installation in einer perspektivischen Ansicht,
- Fig. 13: ein Detail eines neunten erfindungsgemäßen Monopilefundaments und einer neunten erfindungsgemäßen Monopilefundament-Installation in einer perspektivischen Ansicht und
- Fig. 14: ein weiteres Detail eines achten erfindungsgemäßen Monopilefundaments und einer achten erfindungsgemäßen Monopilefundament-Installation jeweils gemäß Fig. 12 in einer perspektivischen Ansicht.

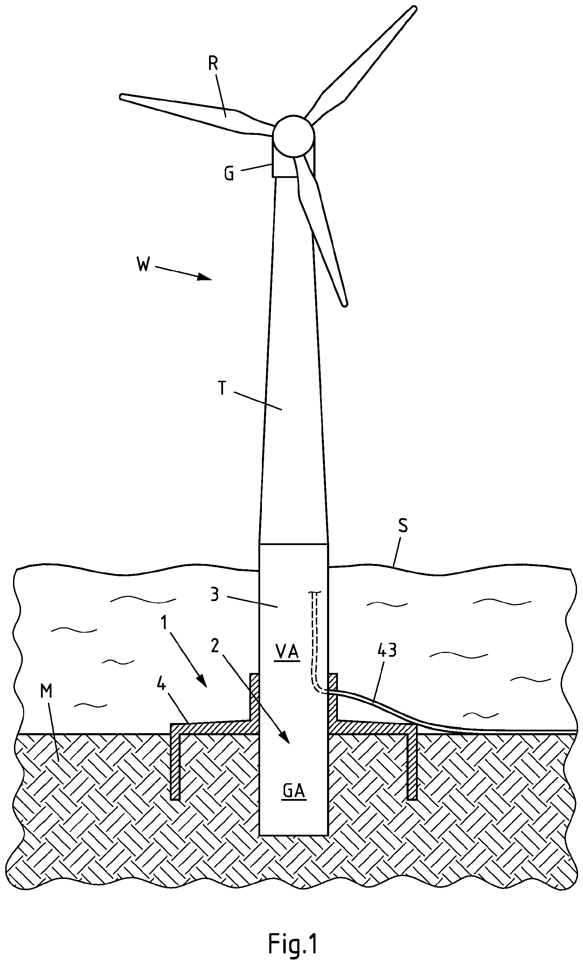

In der Fig. 1 ist eine Offshore-Windkraftanlage W dargestellt, die eine Monopilefundament-Installation 1 mit einem Monopilefundament 2 umfasst. Die Monopilefundament-Installation 1 umfasst einen Gründungspfahl 3 und eine Gründungsverstärkung 4. Sowohl der Gründungspfahl 3 als auch die Gründungsverstärkung 4 sind teilweise in den Meeresboden M eingelassen. Dabei wird der Gründungpfahl 3 durch ein unten offenes Stahlrohr gebildet, das sich bis über den Meeresspiegel S nach oben erstreckt. Der dargestellte und insoweit bevorzugte Gründungspfahl 3 umfasst dabei einen Gründungsabschnitt GA zum Einbringen in den Meeresboden und einen Verstärkungsabschnitt VA zum Verstärken des Gründungspfahls 3 durch die Gründungsverstärkung 4. Auf das obere Ende des Gründungspfahls 3 ist die Turmstruktur T der Windkraftanlage W aufgesetzt, welche die Gondel G und den Rotor R trägt. Im Bereich des Verstärkungsabschnitts VA des Gründungspfahls 3 ist eine nicht im Einzelnen dargestellte Durchführungsöffnung zum Durchführen eines Seekabels 43 vorgesehen, das außerhalb des Monopilefundaments 1 auf dem Meeresboden M verlegt ist.

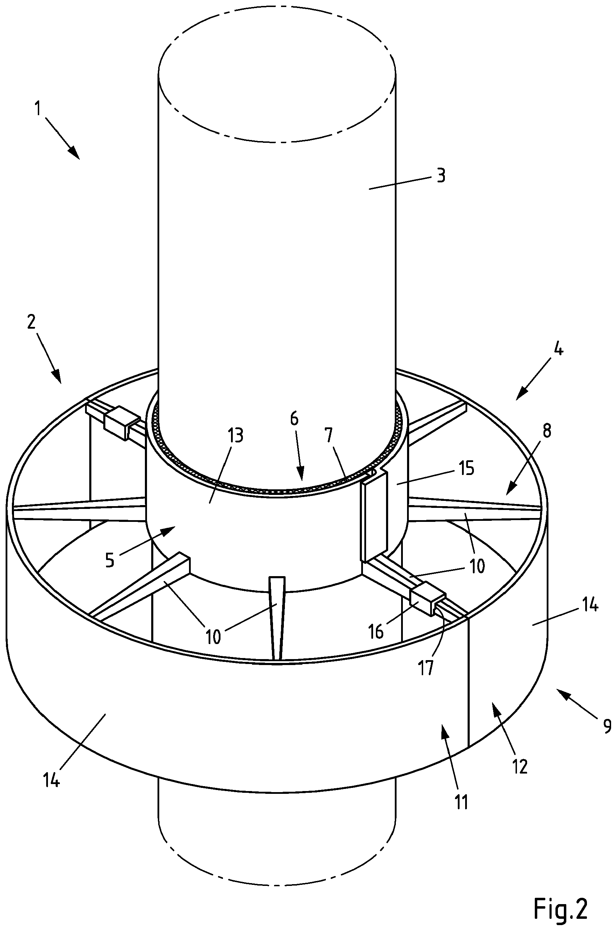

In der Fig. 2 ist die Monopilefundament-Installation 1 im Detail dargestellt, wobei der besseren Übersichtlichkeit halber das Monopilefundament 1 so dargestellt ist, dass die Durchführungsöffnung des Verstärkungsabschnitts VA des Gründungspfahls 3 und das Seekabel von dem Gründungspfahl verdeckt sind. Zunächst soll die Gründungsverstärkung 4 näher erläutert werden. Die Gründungsverstärkung 4 ist außen angrenzend zum Gründungspfahl 3 sowie umlaufend um den Gründungspfahl 3 vorgesehen. Der Gründungspfahl 3 wird von einer Manschette 5 der Gründungsverstärkung umgriffen, wobei bei der dargestellten und insoweit bevorzugten Monopilefundament-Installation 1 der Ringspalt 6 zwischen der Manschette 5 und der Gründungspfahl 3 durch eine Vergussmasse 7, insbesondere in Form eines Grouts bzw. Spezialbetons, ausgefüllt ist, um eine bündige und feste Anbindung der Gründungsverstärkung 4 an den Gründungspfahl 3 zu gewährleisten. Die Manschette 5 ist über eine Stütze 8 mit dem Kragen 9 der Gründungsverstärkung 4 verbunden. Dabei wird die Stütze 8 durch eine Reihe von der Manschette 5 ausgehenden und sternförmig radial nach außen weisenden Stützenelementen 10 gebildet, die mit ihren äußeren Enden an dem Kragen 9 angreifen. Der Kragen 9 ist bei der dargestellten und insoweit bevorzugten Monopilefundament-Installation 1 als wenigstens im Wesentlichen zylinderförmiger Stahlmantel ausgebildet, der mit seinem unteren Ende in den Meeresboden M getrieben worden ist. Der besseren Anschaulichkeit halber ist der Meeresboden M in der Fig. 2 weggelassen worden. Der Kragen 9 kann aber wenigstens im Wesentlichen bis zum oberen Rand in den Meeresboden M eingelassen sein. Der Kragen 9 kann bedarfsweise aber auch mit einem oberen Abschnitt über den Meeresboden M hinausragen.

Kräfte, die seitlich auf die Windkraftanlage W einwirken, werden teilweise direkt über den Gründungspfahl 3 in den Meeresboden M abgeleitet und teilweise über die Vergussmasse 7 oder Groutverbindung GV an die Manschette 5 übertragen, von wo die Kräfte dann über die Stützenelemente 10 radial nach außen geleitet und an dem umlaufenden Kragen 9 abgeleitet werden. Der Kragen 9 stützt sich dabei am Meeresboden M ab und stützt so die gesamte Windkraftanlage W. Die vorliegende Gründungsverstärkung 4 ist zweiteilig aufgebaut, so dass die Gründungsverstärkung 4 am Gründungspfahl 3 nachträglich installiert werden kann.

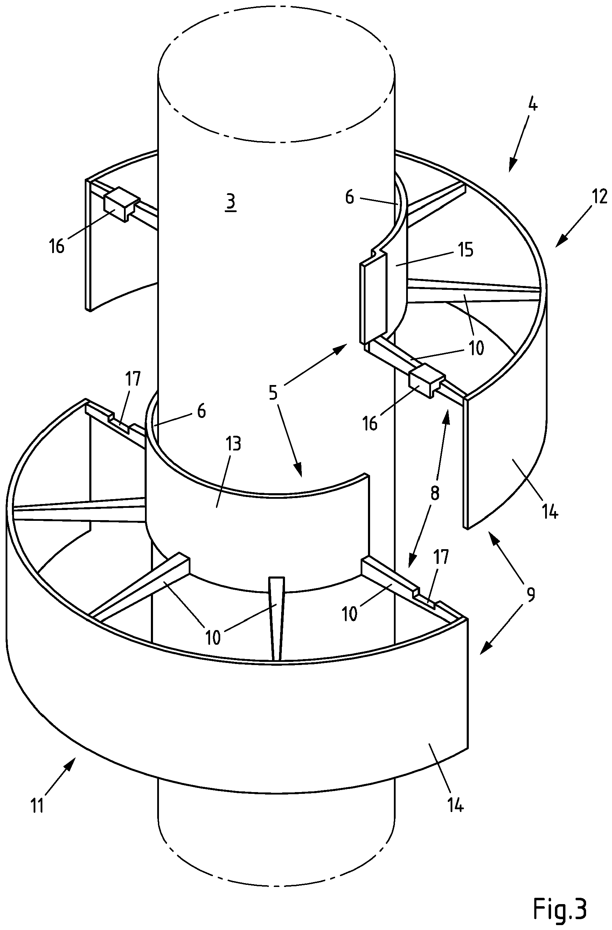

Die Installation erfolgt, wie dies in der Fig. 3 schematisch dargestellt ist. Die dargestellte und insoweit bevorzugte Gründungsverstärkung 4 ist aus zwei separaten Verstärkungselementen 11,12 gebildet. Ein erstes Verstärkungselement 11 wird zunächst mit einem Manschettenelement 13 an den Gründungspfahl 3 herangeführt und dann nach unten in den Meeresboden M eingeführt. Dies erfolgt vorzugsweise durch ein Vibrationsverfahren. Bedarfsweise kann das Verstärkungselement 11 so weit in den Meeresboden M eingebracht werden, dass das zugehörige Kragenelement 14 wenigstens im Wesentlichen über seine ganze Höhe im Meeresboden M angeordnet ist. Die Stützenelemente 10 sind dann aber bevorzugt noch über dem Meeresboden M angeordnet. Als nächster Schritt wird das zweite Verstärkungselement 12 an den Gründungspfahl 3 herangeführt und sodann abgesenkt. Das zweite Verbindungselement 12 wird dann wenigstens im Wesentlichen ebenso weit in den Meeresboden M eingetrieben, wie das erste Verstärkungselement 11. Dabei sind die seitlichen Ränder der Manschettenelemente 13,15 so ausgebildet, dass die Ränder einander seitlich überlappen und auf diese Weise eine umlaufend geschlossene Manschette 5 bilden. Der Ringspalt 6 zwischen der Manschette 5 und dem Gründungspfahl 3 kann so ohne Weiteres mit einer Vergussmasse 7 ausgegossen werden. Die Vergussmasse 7 wird dabei vorzugsweise durch einen Spezialbeton bzw. ein Grout oder eine andere Vergussmasse 7 gebildet.

Des Weiteren werden die Verstärkungselemente 11,12 über die Stützenelemente 10 formschlüssig miteinander verbunden. Dazu ist bei der dargestellten und insoweit bevorzugten Gründungsverstärkung 4 von den benachbarten Stützenelementen 10 jeweils ein Stützenelement 10 mit einem Hakenabschnitt 16 und das jeweils andere Stützenelement 10 mit einem Eingreifabschnitt 17 versehen, in den der korrespondierende Hackenabschnitt 16 formschlüssig eingreifen kann, wenn das zweite Verstärkungselement 12 in der richtigen Ausrichtung in den Meeresboden M eingeführt wird.

Alternativ oder zusätzlich könnten die Verstärkungselemente aber auch gelenkig über eine Schwenkverbindung bzw. ein Gelenk verbunden werden. Dies erfolgt dann insbesondere vor dem Einbringen der Verstärkungselemente in den Meeresboden. Es kann so erst ein Verstärkungselement seitlich an den Gründungspfahl angelegt werden. Dann kann ein weiteres, gelenkig mit dem ersten Verstärkungselement verbundenes Verstärkungselement um eine Schwenkachse geschwenkt werden, die sich wenigstens im Wesentlichen parallel zur Längsachse des Gründungspfahls erstreckt. Auf diese Weise kann der Gründungspfahl umfangsseitig bedarfsweise wenigstens im Wesentlichen vollständig von wenigstens zwei Verstärkungselementen umgriffen werden. Wenn der Gründungspfahl von wenigstens zwei Verstärkungselementen vollständig umgriffen wird, können zwei Verstärkungselemente an angrenzenden Seiten, die vorzugsweise nicht auch durch eine gelenkige Verbindung verbunden sind, kraftschlüssig und/oder formschlüssig verbunden sein, um die Gründungsverstärkung umlaufend zu schließen. Als kraftschlüssige und/oder formschlüssige Verbindung kommt dabei insbesondere eine ein Hakenelement umfassende Verbindung in Frage. Zwingend ist dies jedoch nicht.

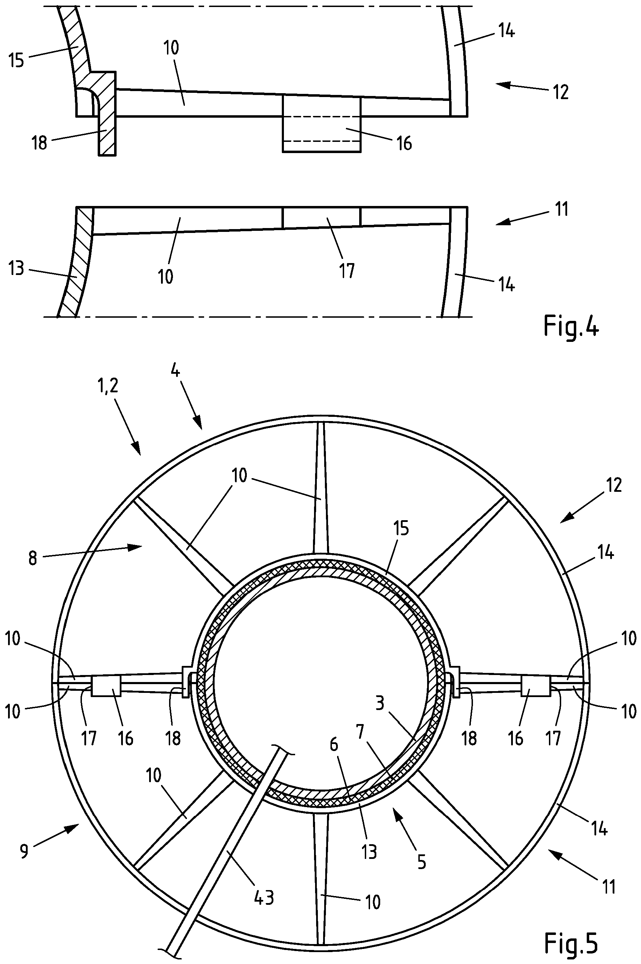

In der Fig. 4 ist ein Detail eines Verbindungsbereichs zwischen den beiden Verstärkungselementen 11,12 vor dem eigentlichen Fügen dargestellt. Die Manschette 5 des oben dargestellten Verstärkungselements 12 weist eine Lasche 18 auf, die das Manschettenelement 13 des unteren Verstärkungselements 11 außen überlappt. Zudem weist das Stützenelement 10 des oberen Verstärkungselements 12 einen Hakenabschnitt 16 auf, der teilweise das Stützenelement 10 des unteren Verstärkungselements 11 formschlüssig umgreift, und zwar im Bereich des Eingreifabschnitts 17. Der Formschluss wirkt dabei in der Umfangsrichtung, in radialer Richtung und auch nach unten.

In der Fig. 5 ist die Monopilefundament-Installation 1 aus der Fig. 1 in einer horizontalen Schnittansicht von oben dargestellt, wobei schematisch die Durchführung des Seekabels im Verstärkungsabschnitt VA des Gründungspfahls 3 zusammen mit dem hindurchgeführten Seekabel 43 dargestellt ist. Bei dem dargestellten und insoweit bevorzugten Monopilefundament 2 sind die beiden Verstärkungselemente 11,12 der Gründungsverstärkung 4 jeweils wenigstens im Wesentlichen halbkreisförmig ausgebildet und jeweils wenigstens im Wesentlichen spiegelsymmetrisch ausgebildet. Beides ist jedoch nicht zwingend erforderlich. Die beiden Verstärkungselemente 11,12 sind an den einander angrenzenden Seiten jeweils über die im Zusammengang mit der Fig. 4 im Einzelnen beschriebene, formschlüssige Verbindungen der angrenzenden Stützenelemente 10 umfassend die Hakenabschnitte 16 miteinander verbunden. Der nach der Installation der Verstärkungselemente 11,12 im Meeresboden und nach dem Verbinden der Verstärkungselemente 11,12 untereinander in den beiden Verbindungsbereichen gebildete Ringspalt 6 zwischen dem Gründungspfahl 3 und der aus den beiden Manschettenelementen 13,15 und der zugehörigen Laschen 18 gebildeten Manschette 5 wird durch eine Vergussmasse 7, insbesondere in Form eines Grout, zur Bildung einer Groutverbindung GV ausgegossen.

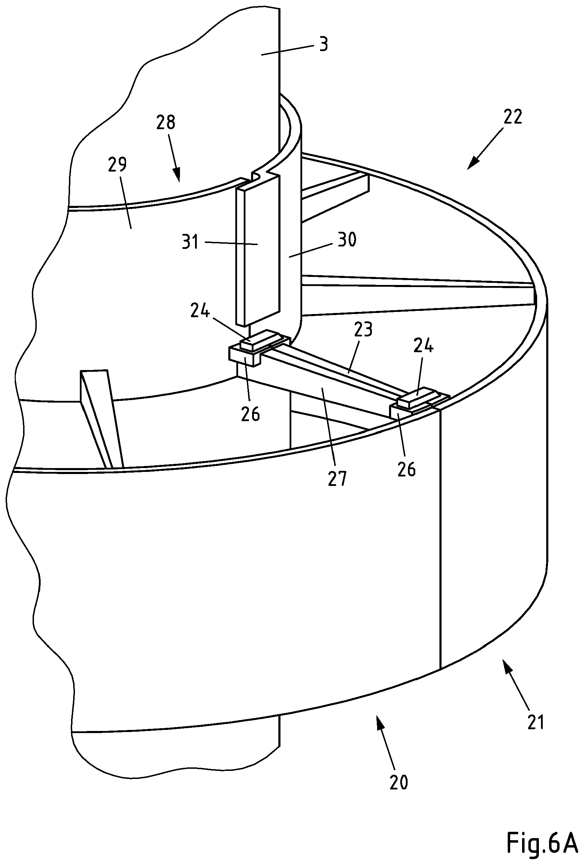

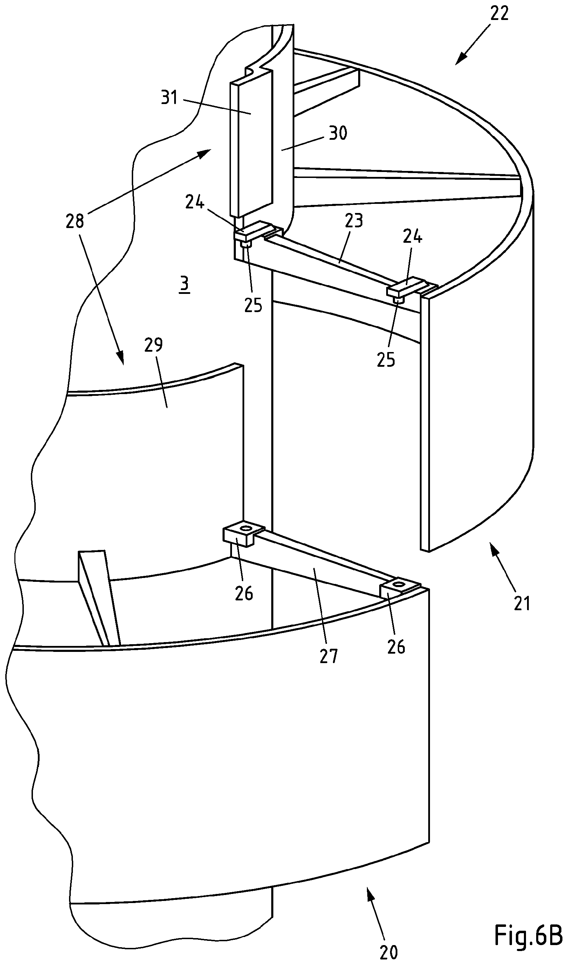

In den Fig. 6A-B ist eine alternative Verbindung zwischen zwei angrenzenden Verstärkungselementen 20,21 einer alternativen Gründungsverstärkung 22 dargestellt, und zwar einmal im zusammengebauten und einmal im noch nicht zusammengebauten Zustand. Hier sind an einem Stützenelement 23 zwei Hakenabschnitte 24 vorgesehen, die jeweils einen nach unten weisenden Stiftabschnitt 25 umfassen, die in korrespondierende Eingreifabschnitte 26 des angrenzenden Stützenelements 27 eingreifen. Die beiden Hakenabschnitte 24 und die Eingreifabschnitte 26 sind dabei jeweils an den einander in der radialen Richtung gegenüberliegenden Enden der Stützenelemente 23,27 vorgesehen. Angrenzend zu den inneren Enden der entsprechenden Stützenelemente 23,27 ist eine Manschette 28 mit in einem Randbereich überlappenden Manschettenelementen29,30 vorgesehen, wobei ein Manschettenelement 29 durch das angrenzende Manschettenelement 30 seitlich in der Umfangsrichtung mittels einer entsprechenden Lasche 31 außen überlappt wird.

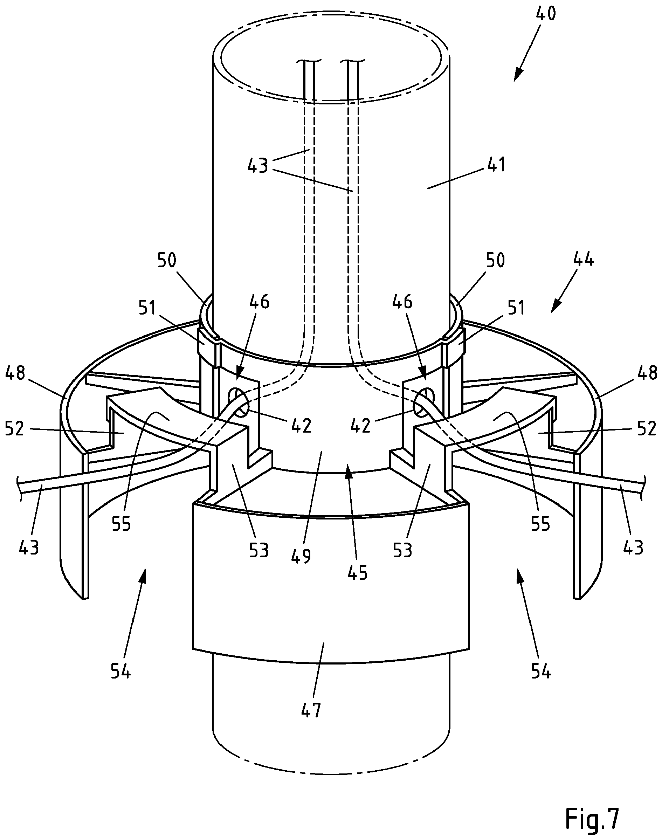

In der Fig. 7 ist eine weitere Monopilefundament-Installation 40 dargestellt, bei der der Gründungspfahl 41 zwei Durchführungsöffnungen 42 aufweist, durch die das Stromkabel 43 in den Gründungspfahl 41 ein und auch wieder austritt. Grundsätzlich könnte aber auch nur eine entsprechende Durchführungsöffnung 42 vorgesehen sein. Damit im Bereich der Durchführungsöffnungen 42 das Stromkabel 43 nicht durch die Gründungsverstärkung 44 beschädigt wird, ist in den Bereichen der Durchführungsöffnungen 42 die Manschette 45 in angrenzenden Bereichen 46 teilweise ausgespart. Dabei stoßen zudem in den Bereichen der Durchführungsöffnungen 42 Verstärkungselemente 47,48 aneinander. Oberhalb der Durchführungsöffnungen 42 überlappen die angrenzenden Manschettenelemente 49,50 einander, und zwar mit Hilfe entsprechend ausgebildeter Laschen 51. Die Stützenelemente 52,53 in diesem Verbindungsbereich 54 sind dabei über eine Art Brücke 55 formschlüssig miteinander verbunden, die darunter ausreichend Platz für das Stromkabel 43 lässt, so dass das bereits verlegte Stromkabel 43 beim Installieren der Gründungsverstärkung 44 nicht gequetscht wird.

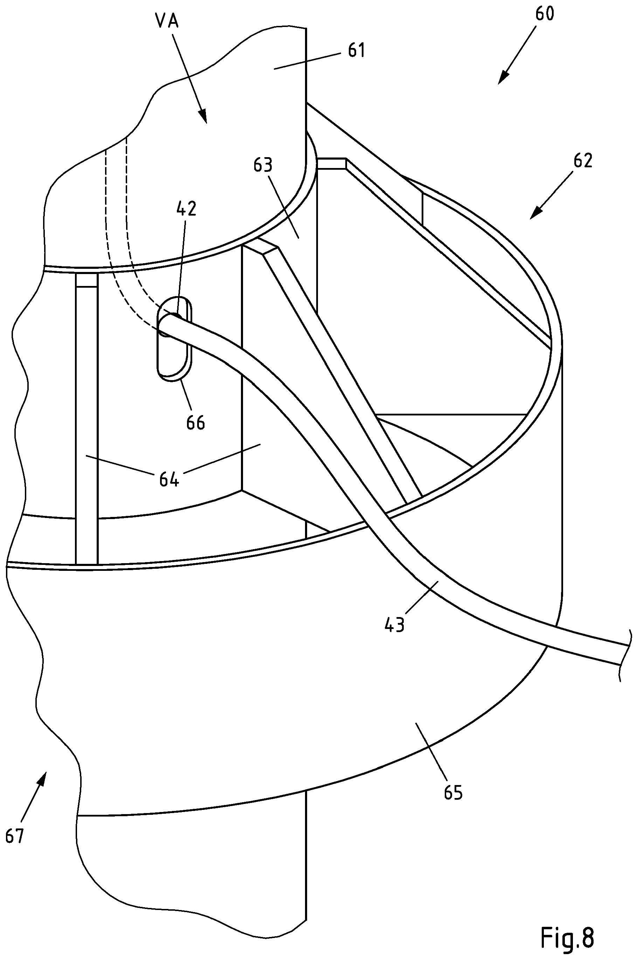

In der Fig. 8 ist ein Detail einer weiteren Monopilefundament-Installation 60 dargestellt, bei der um den Gründungspfahl 61 eine Gründungsverstärkung 62 vorgesehen ist. Es kann sich bei der Gründungsverstärkung 62 um eine mehrteilige Gründungsverstärkung 62 handeln, wie dies grundsätzlich bei den vorherigen Ausführungsbeispielen beschrieben worden ist. Es kann sich aber auch um eine einteilig ausgestaltete Gründungsverstärkung 62 handeln, die dazu ausgebildet ist, über den Verstärkungsabschnitt VA des Gründungspfahls 61 aufgeschoben zu werden. Eine solche einteilige Ausgestaltung der Gründungsverstärkung 62 wäre konstruktiv einfacher und kostengünstiger. Die Manschette 63 der Gründungsverstärkung 62 ist über Stützenelemente 64 mit einem radial von der Manschette 63 beabstandeten Kragen 65 verbunden. In der Manschette 63, bedarfsweise in einem Manschettenelement der Manschette 63, ist dabei ein Langloch 66 vorgesehen, das in Überdeckung mit der Durchführungsöffnung 42 im Verstärkungsabschnitt VA des Gründungspfahls 61 angeordnet ist. Dadurch kann ein Seekabel durch das Langloch 66 und die Durchführungsöffnung 42 im Gründungspfahl 61 hindurchgeführt werden. Dabei erstreckt sich das Langloch 66 mit seiner größeren Längserstreckung wenigstens im Wesentlichen parallel zur Längsachse des Gründungspfahls 61. Mit anderen Worten ist das Langloch 66 so vorgesehen, dass seine Längserstreckung nach oben weist bzw. sich vertikal erstreckt. Bei dem dargestellten und insoweit bevorzugten Monopilefundament 67 kann neben der einen Durchführungsöffnung 42 noch eine weitere Durchführungsöffnung vorgesehen sein, wobei dann vorzugsweise auch diese Durchführungsöffnung überdeckend ein weiteres Langloch 66 in der Manschette 63 vorgesehen ist.

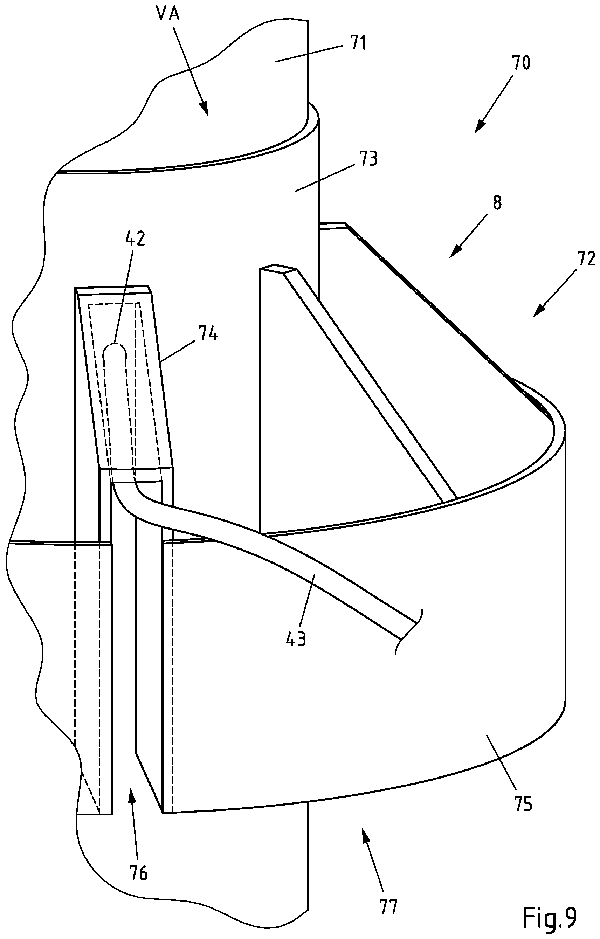

In der Fig. 9 ist ein Detail einer weiteren Monopilefundament-Installation 70 dargestellt, bei der um den Gründungspfahl 71 eine Gründungsverstärkung 72 vorgesehen ist. Es kann sich bei der Gründungsverstärkung 72 um eine mehrteilige Gründungsverstärkung 72 handeln, wie dies grundsätzlich bei den vorherigen Ausführungsbeispielen beschrieben worden ist. Es kann sich aber auch um eine einteilig ausgestaltete Gründungsverstärkung 72 handeln, die dazu ausgebildet ist, über den Verstärkungsabschnitt VA des Gründungspfahls 71 aufgeschoben zu werden. Die Manschette 73 der Gründungsverstärkung 72 ist über Stützenelemente 74 mit einem radial von der Manschette 73 beabstandeten Kragen 75 verbunden. Dabei ist wenigstens ein Stützenelement 74 bzw. wenigstens eine Stütze 8 wenigstens im Wesentlichen radial zum Gründungspfahl 71ausgerichtet. In dieser Richtung, also wenigstens im Wesentlichen radial zum Gründungspfahl 71 weist das wenigstens eine Stützenelement 74 eine Kabelaufnahme 76 auf, in der ein Seekabel 43 aufgenommen ist, das durch eine Durchführungsöffnung 42 im Gründungspfahl 71 hindurchgeführt ist. Die Durchführungsöffnung 42 ist bei dem dargestellten und insoweit bevorzugten Monopilefundament 77 in Umfangsrichtung auf Höhe der Kabelaufnahme 76 und insbesondere fluchtend dazu angeordnet, so dass sich das Seekabel 43 durch die Kabelaufnahme 76 direkt zur Durchführungsöffnung 42 erstrecken kann. Des Weiteren ist die dargestellte Kabelaufnahme 76 in Form einer Aussparung oder eines Kanals ausgebildet. Die Kabelaufnahme 76 ist zudem nach unten geöffnet, so dass die Kabelaufnahme 76 vom Meeresboden M in einer Richtung wenigstens im Wesentlichen parallel zur Längsachse des Gründungspfahls 71 frei zugänglich vorgesehen ist. Dies erlaubt es dem Stützenelement 74, über das bereits verlegte Seekabel 43 geschoben zu werden, ohne dies demontieren zu müssen. Damit in einfacher Weise auch eine Beschädigung des Seekabels 43 durch den Kragen 75 vermieden werden kann, ist bei der dargestellten und insoweit bevorzugten Gründungsverstärkung 72 in Umfangsrichtung auf Höhe des Stützenelements 74 mit der Kabelaufnahme 76 der Kragen 75 bzw. ein Kragenelement ausgespart, und zwar über die gesamte Höhe des Kragens 75. In dieser Aussparung 78 des Kragens 75 kann das Seekabel 43 aufgenommen werden, währen der Kragen 75 bei bereits verlegtem Seekabel 43 in den Meeresboden M eingebracht wird. Bei dem dargestellten und insoweit bevorzugten Monopilefundament 77 kann neben der einen Durchführungsöffnung 42 noch eine weitere Durchführungsöffnung vorgesehen sein, wobei dann vorzugsweise auch die Gründungsverstärkung 72 im Bereich dieser weiteren Durchführungsöffnung wie zuvor für die eine Durchführungsöffnung beschrieben ausgebildet ist.

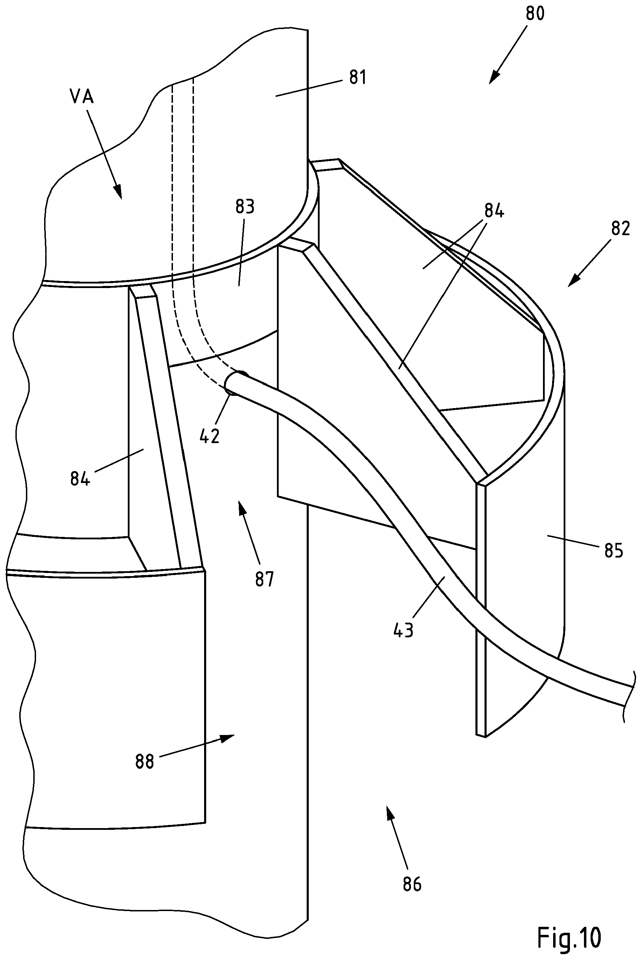

In der Fig. 10 ist ein Detail einer weiteren Monopilefundament-Installation 80 dargestellt, bei der um den Gründungspfahl 81 eine Gründungsverstärkung 82 vorgesehen ist. Es kann sich bei der Gründungsverstärkung 82 um eine mehrteilige Gründungsverstärkung 82 handeln, wie diese grundsätzlich bei den vorherigen Ausführungsbeispielen beschrieben worden ist. Es kann sich aber auch um eine einteilig ausgestaltete Gründungsverstärkung 82 handeln, die dazu ausgebildet ist, über den Verstärkungsabschnitt VA des Gründungspfahls 81 aufgeschoben zu werden. Die Manschette 83 der Gründungsverstärkung 82 ist über Stützenelemente 84 mit einem radial von der Manschette 83 beabstandeten Kragen 85 verbunden. Bei dem entsprechenden Monopilefundament 86 ist wie auch bei dem in der Fig. 9 dargestellten Monopilefundament 77 auch die Manschette 83 wenigstens im Bereich einer Durchführungsöffnung 42 im Gründungspfahl 81 sowie darunter umfangsseitig ausgespart, so dass die Manschette 83 bei bereits verlegtem Seekabel 43 mit der Aussparung 87 über den Gründungspfahl 81 geschoben werden kann. Um die Stabilität der Gründungsverstärkung 82 insgesamt zu steigern, ist bei den dargestellten Gründungsverstärkungen 72,82 der Fig. 9 und 10 die Manschette 73,83 oberhalb der Durchführungsöffnung 42 im Gründungspfahl 81,81 umfangsseitig geschlossen ausgebildet. Dort ist eine Aussparung der Manschette 73,83 auch nicht erforderlich, um eine Beschädigung des Seekabels 43 beim Aufschieben der Gründungsverstärkung 72,82 auf den Gründungsfahl 71,81 zu vermeiden. Der Kragen 85 ist bei der dargestellten und insoweit bevorzugten Gründungsverstärkung 82 im installierten Zustand vollständig unterhalb der Durchführungsöffnung 42 und vorzugsweise wenigstens im Wesentlichen in den Meeresboden M eingebracht vorgesehen. Daher bietet es sich an, dass der Kragen 85 in Umfangsrichtung auf der Höhe der Durchführungsöffnung 42 über seine gesamte Höhe ausgespart ist. Der verbliebene Kragen 85 kann dann an dem bereits verlegten Seekabel 43 vorbei in den Meeresboden M eingebracht werden, ohne das Seekabel 43 demontieren zu müssen. Der Kragen 85 könnte aber alternativ auch oberhalb des bereits verlegten Seekabels 43 umfangsseitig geschlossen sein, wenn das Seekabel 43 dennoch in der darunter angeordneten Aussparung 88 aufgenommen ist. Der Kragen 85 könnte aber auch oberhalb der Durchführungsöffnung 42 umfangsseitig geschlossen sein, wenn der Kragen 85 im installierten Zustand so hoch reicht, weil oberhalb der Durchführungsöffnung 42 für das Seekabel 43 im Gründungspfahl 81 regelmäßig keine Aussparung 88 erforderlich ist, um das Seekabel 43 vor Beschädigung zu schützen. Bei dem dargestellten und insoweit bevorzugten Monopilefundament 86 kann neben der einen Durchführungsöffnung 42 noch eine weitere Durchführungsöffnung vorgesehen sein, wobei dann vorzugsweise auch die Gründungsverstärkung 82 im Bereich dieser weiteren Durchführungsöffnung wie zuvor für die eine Durchführungsöffnung beschrieben ausgebildet ist.

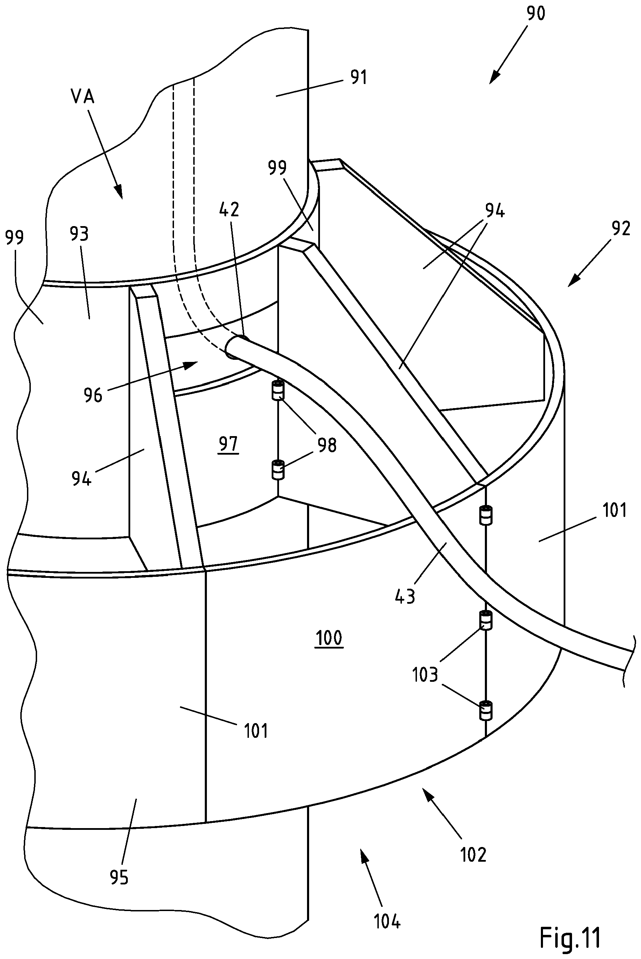

In der Fig. 11 ist ein Detail einer weiteren Monopilefundament-Installation 90 dargestellt, bei der um den Gründungspfahl 91 eine Gründungsverstärkung 92 vorgesehen ist. Es kann sich bei der Gründungsverstärkung 92 um eine mehrteilige Gründungsverstärkung 92 handeln, wie dies grundsätzlich bei den vorherigen Ausführungsbeispielen beschrieben worden ist. Es kann sich aber auch um eine einteilig ausgestaltete Gründungsverstärkung 92 handeln, die dazu ausgebildet ist, über den Verstärkungsabschnitt VA des Gründungspfahls 91 aufgeschoben zu werden. Die Manschette 93 der Gründungsverstärkung 92 ist über Stützenelemente 94 mit einem radial von der Manschette 93 beabstandeten Kragen 95 verbunden. Der Kragen 95 ist oberhalb der Durchführungsöffnung 42 umfangsseitig geschlossen und im Bereich der Durchführungsöffnung 42 umfangsseitig ausgespart. Unterhalb einer Aussparung 96 in der Manschette 93 weist die Manschette 93 umfangsseitig einen von einer Montagestellung in eine Verstärkungsstellung und zurück verstellbaren Montageabschnitt 97 auf. Der Montageabschnitt 97 ist bei der dargestellten Gründungsverstärkung 92 an Scharnieren 98 in einer Richtung wenigstens im Wesentlichen senkrecht zur Längserstreckung des Gründungspfahls 91 schwenkbar an der Gründungsverstärkung 92 gehalten. Der Montageabschnitt 97 kann so von einer Montagestellung in eine Verstärkungsstellung verstellt werden. In der nicht dargestellten Montagestellung ist die Durchführungsöffnung 42 im Gründungspfahl 91 vom Meeresboden M in einer Richtung wenigstens im Wesentlichen parallel zur Längsachse des Gründungspfahls 91 frei zugänglich. Die Manschette 93 kann also bei bereits verlegtem Seekabel 43 auf den Gründungspfahl 91 aufgezogen werden, ohne das Seekabel 43 zu beschädigen. Wenn die Durchführungsöffnung 42 in Umfangsrichtung auf der Höhe der Aussparung 96 in der Manschette 93 ist, kann der Montageabschnitt 97 um die Scharniere 98 in die dargestellte Verstärkungsstellung verstellt werden, in der der Montageabschnitt 97 vorzugsweise mit der von den Scharnieren 98 abgewandten Seite an der Gründungsverstärkung 92 festgelegt ist, um die Gründungsverstärkung 92 weiter auszusteifen. Der Montageabschnitt 97 kann also vorliegend mit in umfangsseitig gegenüberliegenden Seiten mit gegenüberliegenden Manschettenelementen 99 und/oder Stützenelementen 94 verbunden sein und dabei die Manschette 93 in diesem Bereich umfangsseitig wenigstens im Wesentlichen schließen.

Neben der Manschette 93 weist bei der dargestellten und insoweit bevorzugten Gründungsverstärkung 92 auch der Kragen 95 umfangsseitig einen von einer Montagestellung in eine Verstärkungsstellung und zurück verstellbaren Montageabschnitt 100 auf. Zwingend erforderlich ist dies jedoch nicht. So kann der Kragen beispielsweise umlaufend geschlossen sein. Er könnte aber auch einen beispielsweise wenigstens im Wesentlichen vertikal verlaufenden Schlitz aufweisen. Der Schlitz erstreckt sich vorzugsweise vom unteren Rand des Kragens bis zum oberen Rand des Kragens. Ein entsprechender Schlitz kann auch bei anderen Ausführungsbeispielen einer Gründungsverstärkung vorgesehen sein. Bei der lediglich beispielhaft dargestellten Gründungsverstärkung 92 ist auch der Montageabschnitt 100 in der Verstärkungsstellung mit zwei umfangsseitig gegenüberliegenden Kragenelementen 101 oder Stützenelementen 94 verbunden, um den Kragen 95 und damit die Gründungsverstärkung 92 auszusteifen. Der Kragen 95 ist dann umfangsseitig zwischen den beiden umfangsseitig gegenüberliegenden Kragenelementen 101 vorzugsweise wenigstens im Wesentlichen geschlossen. In der Montagestellung des Montageabschnitts 100 des Kragens 95 gibt der Montageabschnitt 100 eine Aussparung 102 im Kragen 95 frei, durch die das bereits verlegte Seekabel 43 nach oben geführt werden kann. Der Montageabschnitt 100 bildet mithin in der Montagestellung eine vom Meeresboden M in eine Richtung wenigstens im Wesentlichen parallel zur Längsachse des Gründungspfahls 91 frei zugängliche Öffnung im Kragen 95. Wenn das Seekabel 43 über den Kragen 95 angehoben worden ist, kann der Montageabschnitt 100 aus der Montagestellung um entsprechende Scharniere 103 in die Verstärkungsstellung geschwenkt werden. In der Verstärkungsstellung ist der Montageabschnitt 100 dann vorzugsweise mit zwei umfangsseitig gegenüberliegenden Kragenelementen 101 oder den zwei umfangsseitig angrenzenden Stützenelementen 94 verbunden. Bei dem dargestellten und insoweit bevorzugten Monopilefundament 104 kann neben der einen Durchführungsöffnung 42 noch eine weitere Durchführungsöffnung im Gründungspfahl 91 vorgesehen sein, wobei dann vorzugsweise auch die Gründungsverstärkung 92 im Bereich dieser weiteren Durchführungsöffnung wie zuvor für die eine Durchführungsöffnung beschrieben ausgebildet ist.

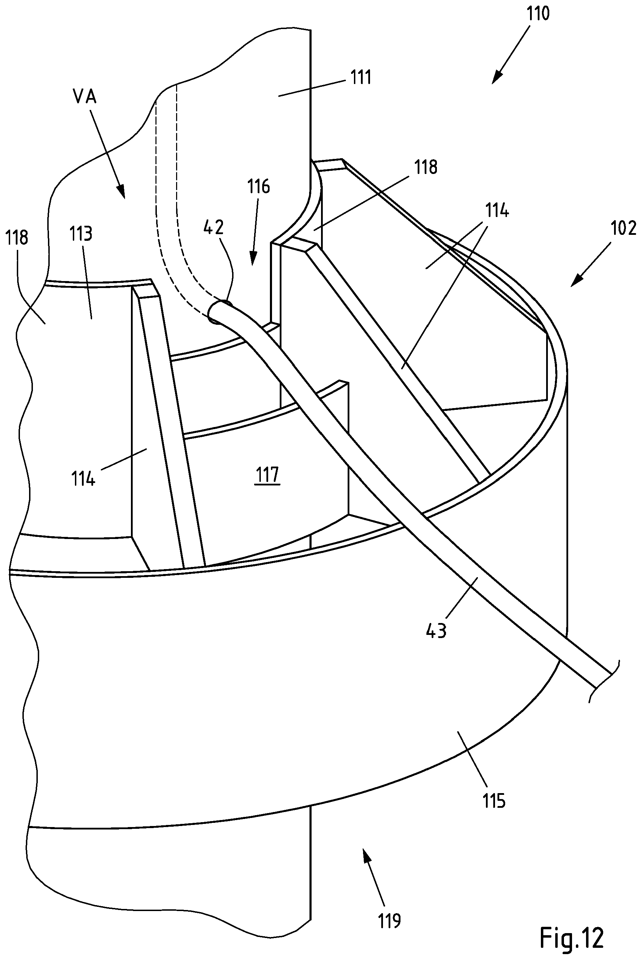

In der Fig. 12 ist ein Detail einer weiteren Monopilefundament-Installation 110 dargestellt, bei der um den Gründungspfahl 111 eine Gründungsverstärkung 112 vorgesehen ist. Es kann sich bei der Gründungsverstärkung 112 um eine mehrteilige Gründungsverstärkung 112 handeln, wie dies grundsätzlich bei den vorherigen Ausführungsbeispielen beschrieben worden ist. Es kann sich aber auch um eine einteilig ausgestaltete Gründungsverstärkung 112 handeln, die dazu ausgebildet ist, über den Verstärkungsabschnitt VA des Gründungspfahls 111 aufgeschoben zu werden. Die Manschette 113 der Gründungsverstärkung 112 ist über Stützenelemente 114 mit einem radial von der Manschette 113 beabstandeten Kragen 115 verbunden. Bei der dargestellten Gründungsverstärkung 112 ist in einem oberen Abschnitt der Manschette 113 abschnittsweise eine Aussparung 116 vorgesehen, obwohl dies nicht zwingend erforderlich wäre. Zudem ist in Umfangsrichtung zwischen wenigstens zwei angrenzenden Stützen 114 und in radialer Richtung zwischen der Manschette 113 und dem Kragen 115 ein Aussteifungselement 117 vorgesehen. Das Aussteifungselement 117 ist bei der dargestellten und insoweit bevorzugten Gründungsverstärkung 112 mit wenigstens zwei angrenzenden Stützenelementen 114 verbunden und aussteifend in der Gründungsverstärkung 112 gehalten. Dabei weist vorliegend die Manschette 113 zwischen den wenigstens zwei angrenzenden Stützenelementen 114 eine geringere Erstreckung wenigstens im Wesentlichen parallel zur Längsachse des Gründungspfahls 111 als die angrenzenden Bereiche der Manschette 113 auf. Dabei kann die abschnittsweise Aussparung 116 der Manschette 113 gegenüber den angrenzenden Manschettenelementen 118 flächenmäßig wenigstens im Wesentlichen in etwa der Fläche des Aussteifungselements 117 entsprechen. Bei dem dargestellten und insoweit bevorzugten Monopilefundament 119 kann neben der einen Durchführungsöffnung 42 noch eine weitere Durchführungsöffnung im Gründungspfahl 111 vorgesehen sein, wobei dann vorzugsweise auch die Gründungsverstärkung im Bereich dieser weiteren Durchführungsöffnung wie zuvor für die eine Durchführungsöffnung beschrieben ausgebildet ist.

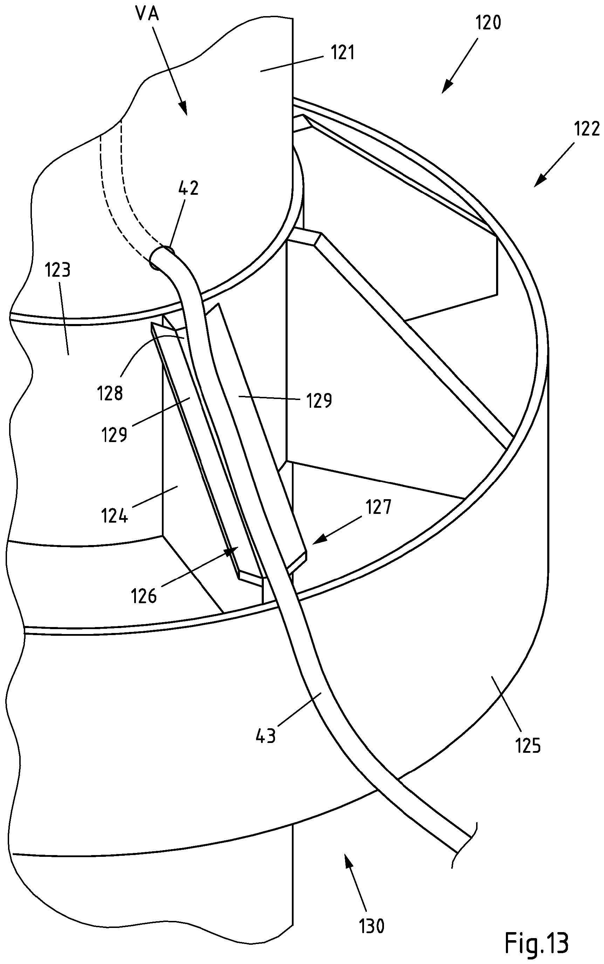

In der Fig. 13 ist ein Detail einer weiteren Monopilefundament-Installation 120 dargestellt, bei der um den Gründungspfahl 121 eine Gründungsverstärkung 122 vorgesehen ist. Es kann sich bei der Gründungsverstärkung 122 um eine mehrteilige Gründungsverstärkung 122 handeln, wie dies grundsätzlich bei den vorherigen Ausführungsbeispielen beschrieben worden ist. Es kann sich aber auch um eine einteilig ausgestaltete Gründungsverstärkung 122 handeln, die dazu ausgebildet ist, über den Verstärkungsabschnitt VA des Gründungspfahls 121 aufgeschoben zu werden. Die Manschette 123 der Gründungsverstärkung 122 ist über Stützenelemente 124 mit einem radial von der Manschette 123 beabstandeten Kragen 125 verbunden. Wenigstens ein Stützenelement 124 weist dabei eine Kabelführung 126 zum Führen des Seekabels 43 in Richtung der Durchführungsöffnung 42 im Gründungspfahl 121 auf, die bei der dargestellten und insoweit bevorzugten Gründungsverstärkung 122 auf dem Stützenelement 124 angeordnet ist. Dabei weist die Kabelführung 126 zur sicheren Aufnahme des Seekabels 43 einen sich quer zu dem zu führenden Seekabel 43 rinnenartigen, insbesondere U-förmigen oder V-förmigen, Querschnitt 127 auf. Während der Boden der Kabelführung 126 wenigstens im Wesentlichen von der Schulter 128 des Stützenelements 124 gebildet wird, werden die Ränder der Kabelführung 126 von zwei sich seitlich an die Schulter 128 des Stützenelements 124 anschließenden Flankenelementen 129 gebildet. Diese Flankenelemente 129 können aus Blechstreifen oder dergleichen ausgebildet werden, die an der Schulter 128 des Stützenelements 124 an dem Stützenelement 124 angeschweißt sein können. Bei dem dargestellten und insoweit bevorzugten Monopilefundament 130 kann neben der einen Durchführungsöffnung 42 noch eine weitere Durchführungsöffnung im Gründungspfahl 121 vorgesehen sein, wobei dann vorzugsweise auch die Gründungsverstärkung im Bereich dieser weiteren Durchführungsöffnung wie zuvor für die eine Durchführungsöffnung beschrieben ausgebildet ist.

Wenn der Spalt zwischen dem Verstärkungsabschnitt des Gründungspfahls und der Manschette der Gründungsverstärkung zum Zweck der Stabilisierung und der besseren Ableitung der Kräfte wegen mit einem Spezialbeton bzw. mit einem Grout ausgegossen werden soll, was in den meisten Fällen beabsichtigt ist, kann das Grout durch eine etwaig in der Manschette vorgesehene Aussparung herauslaufen, bevor das Grout ausgehärtet ist. Dies ist unerwünscht und soll bedarfsweise vermieden werden. Zu diesem Zweck kann der Manschette angrenzend zur Aussparung eine Kühlmittelleitung zugeordnet werden. Diese Kühlmittelleitung kann beispielsweise mit flüssigem Stickstoff oder einem anderen Kühlmittel durchflossen werden, um das Meerwasser im Bereich des Spalts zwischen der Manschette und dem Gründungsfahl, und zwar mehr oder weniger angrenzend an die Aussparung, zu Eis zu gefrieren. Das Eis dichtet dann den Bereich der Manschette entlang der Aussparung ab, bis das Grout im Spalt zwischen der Manschette und dem Gründungspfahl ausgehärtet ist. Anschließend kann die Kühlung beendet werden und das Eis wieder tauen.

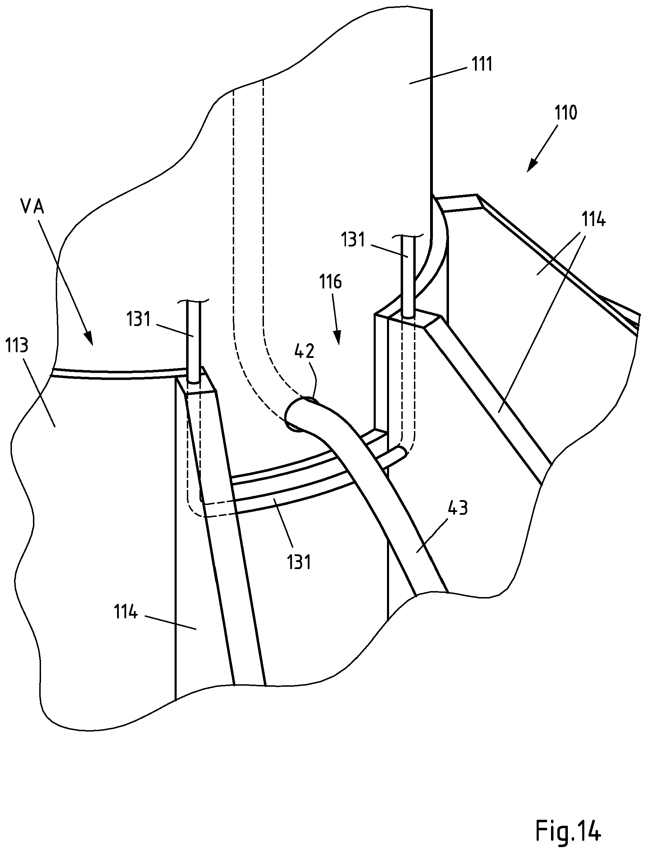

In der Fig. 14 ist die Monopilefundament-Installation 110 von Fig. 12 in einem weiteren Detail dargestellt. Dabei ist als optionale Ausstattung der Monopilefundament-Installation 110 im Bereich der Aussparung 116 eine Kühlleitung 131 vorgesehen, durch die beispielsweise flüssiger Stickstoff geleitet werden kann, um U-förmig um die Aussparung 116 herum das Meerwasser auszufrieren bzw. zu vereisen. Das Eis verhindert dann, dass in den Spalt zwischen dem Gründungspfahl 111 und der Manschette 113 eingefülltes Grout aus der Aussparung 116 ausläuft, bevor das Grout ausgehärtet ist. Diese Lösung ist aber nicht auf die Monopilefundament-Installation 110 gemäß Fig. 12 beschränkt. So könnte auch den anderen in der Zeichnung dargestellten Aussparungen in den Manschetten ebenso wie den nicht im Einzelnen dargestellten Aussparungen in den Manschetten eine Kühlmittelleitung zugeordnet sein. Egal, wie die Aussparung ausgeführt ist, egal, ob die Manschette die Aussparung vollständig oder nur teilweise umschließt, kann die Kühlmittelleitung der entsprechenden Aussparung zugeordnet sein, so dass die Aussparung durch gefrorenes Meerwasser abgedichtet ist, so dass kein Grout oder eine andere Vergussmasse beim Ausfüllen des Spalts zwischen dem Verstärkungsabschnitt des Gründungspfahls und der Manschette der Gründungsverstärkung aus der Aussparung austreten kann, währen das in den Spalt eingefüllte Grout oder die andere Vergussmasse noch nicht ausgehärtet ist.

### Bezugszeichenliste

- 1: Monopilefundament-Installation
- 2: Monopilefundament
- 3: Gründungspfahl
- 4: Gründungsverstärkung
- 5: Manschette
- 6: Ringspalt
- 7: Vergussmasse
- 8: Stütze
- 9: Kragen
- 10: Stützenelement
- 11,12: Verstärkungselement
- 13: Manschettenelement
- 14: Kragenelement
- 15: Manschettenelement
- 16: Hakenabschnitt
- 17: Eingreifabschnitt
- 18: Lasche
- 20,21: Verstärkungselement
- 22: Gründungsverstärkung
- 23: Stützenelement
- 24: Hakenabschnitt
- 25: Stiftabschnitt
- 26: Eingreifabschnitt
- 27: Stützenelement
- 29,30: Manschettenelement
- 31: Lasche
- 40: Monopilefundament-Installation
- 41: Gründungspfahl
- 42: Durchführungsöffnungen
- 43: Stromkabel
- 44: Gründungsverstärkung
- 45: Manschette
- 46: Bereich
- 47,48: Verstärkungselement
- 49,50: Manschettenelement
- 51: Lasche
- 52,53: Stützenelement
- 54: Verbindungsbereich
- 55: Brücke
- 60: Monopilefundament-Installation
- 61: Gründungspfahl
- 62: Gründungsverstärkung
- 63: Manschette
- 64: Stützenelement
- 65: Kragen
- 66: Langloch
- 67: Monopilefundament
- 70: Monopilefundament-Installation
- 71: Gründungspfahl
- 72: Gründungsverstärkung
- 73: Manschette
- 74: Stützenelement
- 75: Kragen
- 76: Kabelaufnahme
- 77: Monopilefundament
- 78: Aussparung
- 80: Monopilefundament-Installation
- 81: Gründungspfahl
- 82: Gründungsverstärkung
- 83: Manschette
- 84: Stützenelement
- 85: Kragen
- 86: Monopilefundament
- 87: Aussparung
- 88: Aussparung
- 90: Monopilefundament-Installation
- 91: Gründungspfahl
- 92: Gründungsverstärkung
- 93: Manschette
- 94: Stützenelement
- 95: Kragen
- 96: Aussparung
- 97: Montageabschnitt
- 98: Scharnier
- 99: Manschettenelement
- 100: Montageabschnitt
- 101: Kragenelemente
- 102: Aussparung
- 103: Scharnier
- 104: Monopilefundament
- 110: Monopilefundament-Installation
- 111: Gründungspfahl
- 112: Gründungsverstärkung
- 113: Manschette
- 114: Stützenelement
- 115: Kragen
- 116: Aussparung
- 117: Aussteifungselement
- 118: Manschettenelement
- 119: Monopilefundament
- 120: Monopilefundament-Installation
- 121: Gründungspfahl
- 122: Gründungsverstärkung
- 123: Manschette
- 124: Stützenelement
- 125: Kragen
- 126: Kabelführung
- 127: Querschnitt
- 128: Schulter
- 129: Flankenelement
- 130: Monopilefundament
- 131: Kühlmittelleitung

- G: Gondel
- GA: Gründungsabschnitt
- GV: Groutverbindung
- M: Meeresboden
- R: Rotor
- S: Meeresspiegel
- T: Turmstruktur
- VA: Verstärkungsabschnitt
- W: Windkraftanlage

## Patentansprüche

1. Monopilefundament (2,67,77,86,104,119,130) für ein Offshore-Bauwerk, insbesondere für eine Windkraftanlage (W), mit einem Gründungspfahl (3,41,61,71,81,91,111,121) zum Tragen des Bauwerks und einer sich außerhalb an den Gründungspfahl (3,41,61,71,81,91,111,121) anschließenden und zum nachträglichen Anbringen an dem Gründungspfahl (3,41,61,71,81,91,111,121) ausgebildeten Gründungsverstärkung (4,22,44,62,72,82,92,112,122), wobei die Gründungsverstärkung (4,22,44,62,72,82,92,112,122) eine Manschette (4,45,63,73,83,93,113,123), einen Kragen (9,65,75,85,95,115,125) und wenigstens eine Stütze (8) aufweist, wobei die Manschette (4,45,63,73,83,93,113,123) dem Gründungspfahl (3,41,61,71,81,91,111,121) zugeordnet und der Kragen (9,65,75,85,95,115,125) über die wenigstens eine Stütze (8) nach außen von der Manschette (4,45,63,73,83,93,113,123) beabstandet gehalten ist, wobei der Gründungspfahl (3,41,61,71,81,91,111,121) einen Gründungsabschnitt (GA) zum Einbringen in den Meeresboden (M) und einen Verstärkungsabschnitt (VA) zum Verbinden des Gründungspfahls (3,41,61,71,81,91,111,121) mit der Manschette (4,45,63,73,83,93,113,123) oberhalb des Meeresbodens (M) aufweist und wobei der Kragen (9,65,75,85,95,115,125) und/oder die Manschette (4,45,63,73,83,93,113,123) zum wenigstens teilweisen Einbringen in den Meeresboden (M) ausgebildet ist,
**dadurch gekennzeichnet, dass**
im Bereich des Verstärkungsabschnitts (VA) eine Durchführungsöffnung (42) im Gründungspfahl (3,41,61,71,81,91,111,121) vorgesehen ist und dass die Manschette (4,45,63,73,83,93,113,123) der Gründungsverstärkung (4,22,44,62,72,82,92,112,122) die Durchführungsöffnung (42) nicht verschließend im Verstärkungsabschnitt (VA) vorgesehen ist.

2. Monopilefundament nach Anspruch 1,
**dadurch gekennzeichnet, dass**
die Gründungsverstärkung (4,22,44,62,72,82,92,112,122) zum Aufschieben auf den Verstärkungsabschnitt (VA) des im Meeresboden (M) eingebrachten Gründungspfahls (3,41,61,71,81,91,111,121) ausgebildet ist und/oder dass der Gründungspfahls (3,41,61,71,81,91,111,121) zum Durchstecken durch die Gründungsverstärkung (4,22,44,62,72,82,92,112,122), insbesondere beim Einbringen in den Meeresboden (M), ausgebildet ist.

3. Monopilefundament nach Anspruch 1 oder 2,
**dadurch gekennzeichnet, dass**
die Gründungsverstärkung (4,22,44,62,72,82,92,112,122) in Umfangsrichtung des Gründungspfahls (3,41,61,71,81,91,111,121) mehrere, insbesondere zwei, drei oder vier, nebeneinander anzuordnende Verstärkungselemente (11,12,20,21,47,48) aufweist und dass die in Umfangsrichtung jeweils zueinander benachbarten Seiten der Verstärkungselemente (11,12,20,21,47,48) zum formschlüssigen, gelenkigen und/oder kraftschlüssigen Verbinden untereinander ausgebildet sind und dass, vorzugsweise, jedes Verstärkungselement (11,12,20,21,47,48) ein Manschettenelement (13,15,29,30,49,50) der Manschette (4,45,63,73,83,93,113,123), ein Kragenelement (14) des Kragens (9,65,75,85,95,115,125) und wenigstens ein Stützenelement (10,52,53,64,74,84,94,114,124) der Stütze (8) aufweist und dass, weiter vorzugsweise, die in Umfangsrichtung jeweils zueinander benachbarten Seiten der Manschettenelemente (13,15,29,30,49,50), Kragenelemente (14) und/oder Stützenelemente (10,52,53,64,74,84,94,114,124) untereinander zum formschlüssigen, gelenkigen und/oder kraftschlüssigen Verbinden ausgebildet sind.

4. Monopilefundament nach einem der Ansprüche 1 bis 3,
**dadurch gekennzeichnet, dass**
die Manschette (4,45,63,73,83,93,113,123), insbesondere die Manschettenelemente (13,15,29,30,49,50), zum Verbinden mit der Außenseite des Verstärkungsabschnitts (VA) des Gründungspfahls (3,41,61,71,81,91,111,121) über eine in einem Spalt (6,62,79) zwischen der Manschette (4,45,63,73,83,93,113,123), insbesondere den Manschettenelementen (13,15,29,30,49,50), und der Außenseite des Verstärkungsabschnitts (VA) vorgesehenen Groutverbindung (GV) ausgebildet ist und/oder dass wenigstens zwei benachbarte Manschettenelemente (13,15,29,30,49,50) benachbarter Verstärkungselemente (11,12,20,21,47,48) in Umfangrichtung zum abschnittsweisen Überlappen ausgebildet sind und/oder dass die Manschettenelemente (13,15,29,30,49,50) zur Bildung einer in radialer Richtung geschlossenen Manschette (4,45,63,73,83,93,113,123) ausgebildet sind.

5. Monopilefundament nach einem der Ansprüche 1 bis 4,
**dadurch gekennzeichnet, dass**
die wenigstens eine Stütze (8), insbesondere das wenigstens eine Stützenelement (10,52,53,64,74,84,94,114,124), in Form einer Rippe oder Strebe ausgebildet ist und dass, vorzugsweise, angrenzende Stützenelemente (10,52,53,64,74,84,94,114,124) benachbarter Verstärkungselemente (11,12,20,21,47,48) jeweils zum formschlüssigen, gelenkigen und/oder kraftschlüssigen Ineinandergreifen ausgebildet sind und dass, weiter vorzugsweise, ein Stützenelement (10,52,53,64,74,84,94,114,124) der angrenzenden Stützenelemente (10,52,53,64,74,84,94,114,124) wenigstens einen Hakenabschnitt (16,24) und das jeweils andere Stützenelement (10,52,53,64,74,84,94,114,124) wenigstens einen zum Eingreifen in den wenigstens einen Hakenabschnitt (16,24) ausgebildeten Eingreifabschnitt (17,26) aufweist.

6. Monopilefundament nach einem der Ansprüche 3 bis 5,
**dadurch gekennzeichnet, dass**
die angrenzenden Manschettenelemente (49,50) im Bereich von wenigstens einer Durchführungsöffnung (42) im Gründungspfahl (3,41,61,71,81,91,111,121) voneinander beabstandet sind.

7. Monopilefundament nach einem der Ansprüche 1 bis 6,
**dadurch gekennzeichnet, dass**
die Manschette (63) ein in Überdeckung mit der Durchführungsöffnung (42) im Gründungspfahl vorgesehenes Langloch (66) zur Durchführung eines Seekabels (43) aufweist und, vorzugsweise, sich das Langloch (66) in seiner Längsrichtung wenigstens im Wesentlichen parallel zur Längsachse des Gründungspfahls (61) erstreckt und/oder
dass die Manschette (73,83,93,113) im Bereich der Durchführungsöffnung (42) im Gründungspfahl (71,81,91,111) sowie darunter umfangsseitig ausgespart und, vorzugsweise, die Manschette (73,83,93,113) oberhalb der Durchführungsöffnung (42) im Gründungspfahl (71,81,91,111) umfangsseitig geschlossen ist und/oder
dass der Kragen (75,85,95) wenigstens abschnittsweise unterhalb der Durchführungsöffnung (42) im Gründungspfahl (71,81,91) umfangsseitig ausgespart und, vorzugsweise, der Kragen (75,85,95), insbesondere oberhalb der Aussparung (78,88,102), umfangsseitig geschlossen ist.

8. Monopilefundament nach einem der Ansprüche 1 bis 7,
**dadurch gekennzeichnet, dass**
die Manschette (93) in einem Bereich unterhalb der Durchführungsöffnung (42) im Gründungspfahl (91) umfangsseitig einen von einer Montagestellung in eine Verstärkungsstellung und zurück verstellbaren Montageabschnitt (97) aufweist, dass der Montageabschnitt (97) in der Montagestellung die Durchführungsöffnung (42) im Gründungspfahl (91) vom Meeresboden (M) in einer Richtung wenigstens im Wesentlichen parallel zur Längsachse des Gründungspfahls (91) frei zugänglich ist und dass der Montageabschnitt (97) in der Verstärkungsstellung mit zwei umfangsseitig gegenüberliegenden Manschettenelementen (99) verbunden ist, insbesondere die Manschette (93) umfangsseitig zwischen den beiden umfangsseitig gegenüberliegenden Manschettenelementen (99) schließt.

9. Monopilefundament nach einem der Ansprüche 1 bis 8,
**dadurch gekennzeichnet, dass**
der Kragen (95) umfangsseitig einen von einer Montagestellung in eine Verstärkungsstellung und zurück verstellbaren Montageabschnitt (100) aufweist, dass der Montageabschnitt (100) in der Verstärkungsstellung mit zwei umfangsseitig gegenüberliegenden Kragenelementen (101) verbunden ist, insbesondere den Kragen (95) umfangsseitig zwischen den beiden umfangsseitig gegenüberliegenden Kragenelementen (101) schließt und dass der Montageabschnitt (100) in der Montagestellung eine vom Meeresboden (M) in eine Richtung wenigstens im Wesentlichen parallel zur Längsachse des Gründungspfahls (91) frei zugängliche Öffnung im Kragen bildet.

10. Monopilefundament nach Anspruch 8 oder 9,
**dadurch gekennzeichnet, dass**
der Montageabschnitt (97) der Manschette (93) und/oder der Montageabschnitt (100) des Kragens (95) zum Verstellen von der Montangestellung in die Verstärkungsstellung und zurück schwenkbar, klappbar und/oder faltbar ausgebildet ist und/oder dass der Montageabschnitt (97) der Manschette (93) und/oder der Montageabschnitt (100) des Kragens (95) in der Montagestellung wenigstens an einem umfangsseitig angrenzenden Manschettenelement (99), einem umfangsseitig angrenzenden Kragenelement (101) und/oder einem umfangsseitig angrenzenden Stützenelement (94) festgelegt ist.

11. Monopilefundament nach einem der Ansprüche 1 bis 10,
**dadurch gekennzeichnet, dass**
wenigstens ein Stützenelement (74) eine sich wenigstens im Wesentlichen radial zum Gründungspfahl (71) ersteckende, insbesondere als Aussparung des Stützenelements (74) oder als Kanal in dem Stützenelement (74) ausgebildete, Kabelaufnahme (76) zur Aufnahme des sich durch die Durchführungsöffnung (42) im Gründungspfahl (71) erstreckenden Seekabels (43) aufweist und, vorzugsweise, die Kabelaufnahme (76) vom Meeresboden (M) in einer Richtung wenigstens im Wesentlichen parallel zur Längsachse des Gründungspfahls (71) frei zugänglich vorgesehen ist und/oder dass in Umfangsrichtung zwischen wenigstens zwei angrenzenden Stützenelementen (114) und in radialer Richtung zwischen der Manschette (113) und dem Kragen (115) ein mit den wenigstens zwei angrenzenden Stützenelementen (114) verbundenes Aussteifungselement (117) vorgesehen ist und, vorzugsweise, die Manschette (113) zwischen den wenigstens zwei angrenzenden Stützenelementen (114) eine geringere Erstreckung wenigstens im Wesentlichen parallel zur Längsachse des Gründungspfahls (111) als die angrenzenden Bereiche der Manschette (113) aufweist.

12. Monopilefundament nach Anspruch 11,
**dadurch gekennzeichnet, dass**
die Erstreckung der Manschette (113) zwischen den wenigstens zwei angrenzenden Stützenelementen (114) gegenüber den angrenzenden Bereichen der Manschette (113) jeweils wenigstens im Wesentlichen parallel zur Längsachse des Gründungspfahls (111) wenigstens im Wesentlichen um einen Betrag geringer ist, der wenigstens im Wesentlichen der Erstreckung des Aussteifungselements (117) wenigstens im Wesentlichen parallel zur Längsachse des Gründungspfahls (111) entspricht.

13. Monopilefundament nach einem der Ansprüche 1 bis 12,
**dadurch gekennzeichnet, dass**
wenigstens die Stütze (8) oder ein Stützenelement (124) eine Kabelführung (126) zum Führen des Seekabels (43) in Richtung der Durchführungsöffnung (42) aufweist und, vorzugsweise, die Kabelführung (126) einen quer zu dem zu führenden Seekabel (43) einen rinnenartigen, insbesondere U-förmigen oder V-förmigen, Querschnitt (127) aufweist und, weiter vorzugsweise, die Kabelführung (126) wenigstens im Wesentlichen von der Schulter (128) der Stütze (8) oder des Stützelements (124) und zwei sich seitlich anschließenden Flankenelementen (129) gebildet wird und/oder
dass der Manschette (113) angrenzend zur Aussparung (116) in der Manschette (113), insbesondere zum Ausfrieren von Meerwasser einerseits in einem Spalt zwischen dem Verstärkungsabschnitt (VA) des Gründungspfahls (111) und der Manschette (113) der Gründungsverstärkung (112) und andererseits in einem Bereich angrenzend zur Aussparung (116), eine Kühlmittelleitung (131) zugeordnet ist.

14. Monopilefundament-Installation für ein Offshore-Bauwerk, insbesondere für eine Windkraftanlage, mit einem in einem Meeresboden (M) verankerten Monopilefundament nach einem der Ansprüche 1 bis 13, wobei der Gründungspfahl (3,41,61,71,81,91,111,121) mit seinem Gründungsabschnitt (GA) in den Meeresboden (M) eingebracht ist, wobei der Kragen (9,65,75,85,95,115,125) und/oder die Manschette (4,45,63,73,83,93,113,123) wenigstens teilweise, insbesondere vollständig, in den Meeresboden (M) eingebracht ist.

15. Verfahren zum Errichten eines Offshore-Bauwerks, insbesondere für eine Windkraftanlage, mit einem Monopilefundament nach einem der Ansprüche 1 bis 13,
- bei dem ein bereits bestehendes Offshore-Bauwerk von einem Gründungspfahl (3,41,61,71,81,91,111,121) zum Tragen des Bauwerks entfernt und ein neues Offshore-Bauwerk auf dem Gründungspfahl errichtet wird,
- bei dem die Gründungsverstärkung (4,22,44,62,72,82,92,112,122) nachträglich an dem bereits teilweise im Meeresboden (M) eingebrachten Gründungspfahl (3,41,61,71,81,91,111,121) des bereits bestehenden Offshore-Bauwerks angebracht wird,
- bei dem der Kragen (9,65,75,85,95,115,125) und/oder die Manschette (4,45,63,73,83,93,113,123) der Gründungsverstärkung (4,22,44,62,72,82,92,112,122), vorzugsweise über Vibration, wenigstens teilweise in den Meeresboden (M) eingebracht wird.

16. Verfahren nach Anspruch 15,
- bei dem in Umfangsrichtung des Gründungspfahls (3,41,61,71,81,91,111,121) die Kragen (9,65,75,85,95,115,125) mehrerer, insbesondere von zwei, drei oder vier, Verstärkungselemente (11,12,20,21,47,48), vorzugsweise über Vibration, wenigstens teilweise in den Meeresboden (M) eingebracht werden,
- bei dem die Verstärkungselemente (11,12,20,21,47,48) durch das wenigstens teilweise Einbringen in den Meeresboden (M), insbesondere nacheinander, oder vor dem wenigstens teilweisen Einbringen in den Meeresboden (M) nebeneinander positioniert werden,
- bei dem die jeweils zueinander benachbarten Seiten der angrenzenden Verstärkungselemente (11,12,20,21,47,48), vorzugsweise durch das wenigstens teilweise Einbringen in den Meeresboden (M) oder vor dem wenigstens teilweisen Einbringen in den Meeresboden (M), formschlüssig, gelenkig und/oder kraftschlüssig miteinander verbunden werden und
- bei dem der Verstärkungsabschnitt (VA) des Gründungspfahls (3,41,61,71,81,91,111,121) oberhalb des Meeresbodens (M) mit der Manschette (4,45,63,73,83,93,113,123) der Gründungsverstärkung (4,22,44,62,72,82,92,112,122) verbunden wird.

17. Verfahren nach Anspruch 15 oder 16,
- bei dem in Umfangsrichtung jeweils zueinander benachbarten Seiten der Manschettenelemente (13,15,29,30,49,50), Kragenelemente (14) und/oder Stützenelemente (10,52,53,64,74,84,94,114,124) untereinander, vorzugsweise durch das wenigstens teilweise Einbringen in den Meeresboden (M) oder vor dem wenigstens teilweisen Einbringen in den Meeresboden (M), formschlüssig, gelenkig und/oder kraftschlüssig verbunden werden und
- bei dem wenigstens zwei benachbarte Manschettenelemente (13,15,29,30,49,50) benachbarter Verstärkungselemente (11,12,20,21,47,48) in Umfangrichtung, insbesondere zur Bildung einer in radialer Richtung geschlossenen Manschette (4,45,63,75), abschnittsweise überlappend positioniert werden.

18. Verfahren nach einem der Ansprüche 15 bis 17,
bei dem die Manschette (4,45,63,73,83,93,113,123), insbesondere die Manschettenelemente (13,15,29,30,49,50), mit der über einen Spalt (6,62) beabstandeten Außenseite des Verstärkungsabschnitts (VA) des Gründungspfahls (3,41,61,71,81,91,111,121) über eine in den Spalt (6,62) eingebrachte Vergussmasse (7), insbesondere Grout, verbunden wird und/oder
- bei dem die Gründungsverstärkung (4,22,44,62,72,82,92,112,122) auf den Verstärkungsabschnitt (VA) des, insbesondere im Meeresboden (M) eingebrachten, Gründungspfahls (3,41,61,71,81,91,111,121) aufgeschoben und/oder der Gründungspfahl (3,41,61,71,81,91,111,121), insbesondere beim Einbringen in den Meeresboden (M), durch die, insbesondere in den Meeresboden (M) eingesteckte, Gründungsverstärkung (4,22,44,62,72,82,92,112,122) durchgesteckt wird und/oder
- bei dem ein Kühlmittel, insbesondere zum Ausfrieren von Meerwasser einerseits in einem Spalt zwischen dem Verstärkungsabschnitt (VA) des Gründungspfahls (111) und der Manschette (113) der Gründungsverstärkung (112) und andererseits in einem Bereich angrenzend zur Aussparung (116), durch wenigstens eine Kühlleitung (131) geleitet und die wenigstens eine Kühlmittelleitung (131) einer Aussparung (116) in der Manschette (113) zugeordnet ist.

## Claims

1. Monopile foundation (2, 67, 77, 86, 104, 119, 130) for an offshore structure, in particular for a wind turbine (W), with a foundation pile (3, 41, 61, 71, 81, 91, 111, 121) for supporting the structure and a foundation reinforcement (4, 22, 44, 62, 72, 82, 92, 112, 122) adjoining the outside of the foundation pile (3, 41, 61, 71, 81, 91, 111, 121) and designed for subsequently attaching to the foundation pile (3, 41, 61, 71, 81, 91, 111, 121), wherein the foundation reinforcement (4, 22, 44, 62, 72, 82, 92, 112, 122) has a sleeve (4, 45, 63, 73, 83, 93, 113, 123), a collar (9, 65, 75, 85, 95, 115, 125) and at least one support (8), wherein the sleeve (4, 45, 63, 73, 83, 93, 113, 123) is assigned to the foundation pile (3, 41, 61, 71, 81, 91, 111, 121) and the collar (9, 65, 75, 85, 95, 115, 125) is held spaced apart outwards from the sleeve (4, 45, 63, 73, 83, 93, 113, 123) via the at least one support (8), wherein the foundation pile (3, 41, 61, 71, 81, 91, 111, 121) has a foundation section (GA) for insertion into the seabed (M) and a reinforcement section (VA) for connecting the foundation pile (3, 41, 61, 71, 81, 91, 111, 121) to the sleeve (4, 45, 63, 73, 83, 93, 113, 123) above the seabed (M) and wherein the collar (9, 65, 75, 85, 95, 115, 125) and/or the sleeve (4, 45, 63, 73, 83, 93, 113, 123) is designed for at least partial insertion into the seabed (M), **characterised in that** in the region of the reinforcement section (VA), a feed-through opening (42) is provided in the foundation pile (3, 41, 61, 71, 81, 91, 111, 121) and **in that** the sleeve (4, 45, 63, 73, 83, 93, 113, 123) of the foundation reinforcement (4, 22, 44, 62, 72, 82, 92, 112, 122) is provided in the reinforcement section (VA) so as to not seal the feed-through opening (42).

2. Monopile foundation according to claim 1, **characterised in that** the foundation reinforcement (4, 22, 44, 62, 72, 82, 92, 112, 122) is designed to be pushed onto the reinforcement section (VA) of the foundation pile (3, 41, 61, 71, 81, 91, 111, 121) inserted into the seabed (M) and/or **in that** the foundation pile (3, 41, 61, 71, 81, 91, 111, 121) is designed to be pushed through the foundation reinforcement (4, 22, 44, 62, 72, 82, 92, 112, 122), in particular when inserted into the seabed (M).

3. Monopile foundation according to claim 1 or 2, **characterised in that** the foundation reinforcement (4, 22, 44, 62, 72, 82, 92, 112, 122) in the circumferential direction of the foundation pile (3, 41, 61, 71, 81, 91, 111, 121) has a plurality of, in particular two, three or four, reinforcement elements (11, 12, 20, 21, 47, 48) to be arranged next to one another and **in that** the sides of the reinforcement elements (11, 12, 20, 21, 47, 48) each adjacent to one another in the circumferential direction are designed to connect to one another in a form-fitting, articulated and/or force-fitting manner and **in that**, preferably, each reinforcement element (11, 12, 20, 21, 47, 48) has a sleeve element (13, 15, 29, 30, 49, 50) of the sleeve (4, 45, 63, 73, 83, 93, 113, 123), a collar element (14) of the collar (9, 65, 75, 85, 95, 115, 125) and at least one support element (10, 52, 53, 64, 74, 84, 94, 114, 124) of the support (8) and **in that**, further preferably, the sides of the sleeve elements (13, 15, 29, 30, 49, 50), collar elements (14) and/or support elements (10, 52, 53, 64, 74, 84, 94, 114, 124), which are respectively adjacent to one another in the circumferential direction, are designed to connect to one another in a form-fitting, articulated and/or force-fitting manner.

4. Monopile foundation according to any one of claims 1 to 3, **characterised in that** the sleeve (4, 45, 63, 73, 83, 93, 113, 123), in particular the sleeve elements (13, 15, 29, 30, 49, 50), is designed to connect to the outer side of the reinforcement section (VA) of the foundation pile (3, 41, 61, 71, 81, 91, 111, 121) via a grout connection (GV) provided in a gap (6, 62, 79) between the sleeve (4, 45, 63, 73, 83, 93, 113, 123), in particular the sleeve elements (13, 15, 29, 30, 49, 50), and the outer side of the reinforcement section (VA) and/or **in that** at least two adjacent sleeve elements (13, 15, 29, 30, 49, 50) of adjacent reinforcement elements (11, 12, 20, 21, 47, 48) are designed in the circumferential direction to overlap in sections and/or **in that** the sleeve elements (13, 15, 29, 30, 49, 50) are designed to form a sleeve (4, 45, 63, 73, 83, 93, 113, 123) closed in radial direction.

5. Monopile foundation according to any one of claims 1 to 4, **characterised in that** the at least one support (8), in particular the at least one support element (10, 52, 53, 64, 74, 84, 94, 114, 124), is designed in the form of a rib or strut and **in that**, preferably, adjoining support elements (10, 52, 53, 64, 74, 84, 94, 114, 124) of adjacent reinforcement elements (11, 12, 20, 21, 47, 48) are each designed for engaging into one another in a form-fitting, articulated and/or force-fitting manner and **in that**, further preferably, a support element (10, 52, 53, 64, 74, 84, 94, 114, 124) of the adjoining support elements (10, 52, 53, 64, 74, 84, 94, 114, 124) has at least one hook section (16, 24) and the respectively other support element (10, 52, 53, 64, 74, 84, 94, 114, 124) has at least one engagement section (17, 26) designed to engage into the at least one hook section (16, 24).

6. Monopile foundation according to any one of claims 3 to 5, **characterised in that** the adjoining sleeve elements (49, 50) are spaced apart from one another in the region of at least one feed-through opening (42) in the foundation pile (3, 41, 61, 71, 81, 91, 111, 121).

7. Monopile foundation according to any one of claims 1 to 6, **characterised in that** the sleeve (63) has an elongated hole (66) provided in overlap with the feed-through opening (42) in the foundation pile for feeding through a sea cable (43) and, preferably, the elongated hole (66) extends in its longitudinal direction at least substantially parallel to the longitudinal axis of the foundation pile (61) and/or
**in that** the sleeve (73, 83, 93, 113) is recessed on the circumferential side in the region of the feed-through opening (42) in the foundation pile (71, 81, 91, 111) as well as therebelow and, preferably, the sleeve (73, 83, 93, 113) is closed on the circumferential side above the feed-through opening (42) in the foundation pile (71, 81, 91, 111) and/or
**in that** the collar (75, 85, 95) is recessed at least in sections below the feed-through opening (42) in the foundation pile (71, 81, 91) on the circumferential side and, preferably, the collar (75, 85, 95), in particular above the recess (78, 88, 102), is closed on the circumferential side.

8. Monopile foundation according to any one of claims 1 to 7, **characterised in that** the sleeve (93) in a region below the feed-through opening (42) in the foundation pile (91) has on the circumferential side an assembly section (97) adjustable from an assembly position to a reinforcement position and back, **in that** the assembly section (97) in the assembly position the feed-through opening (42) in the foundation pile (91) from the seabed (M) is freely accessible in a direction at least substantially parallel to the longitudinal axis of the foundation pile (91) and **in that** the assembly section (97) is connected in the reinforcement position to two sleeve elements (99) located opposingly on the circumferential side, in particular circumferentially closes the sleeve (93) between the two sleeve elements (99) located opposingly on the circumferential side.

9. Monopile foundation according to any one of claims 1 to 8, **characterised in that** the collar (95) has an assembly section (100) adjustable from an assembly position to a reinforcement position and back on the circumferential side, **in that** the assembly section (100) is connected in the reinforcement position with two collar elements (101) located opposingly on the circumferential side, in particular closes the collar (95) circumferentially between the two collar elements (101) located opposingly on the circumferential side, and **in that** the assembly section (100) in the assembly position forms an opening in the collar freely accessible from the seabed (M) in a direction at least substantially parallel to the longitudinal axis of the foundation pile (91).

10. Monopile foundation according to claim 8 or 9, **characterised in that** the assembly section (97) of the sleeve (93) and/or the assembly section (100) of the collar (95) is designed to be pivotable, collapsible and/or foldable for adjusting from the assembly position to the reinforcement position and back, and/or **in that** the assembly section (97) of the sleeve (93) and/or the assembly section (100) of the collar (95) is fixed in the assembly position at least on a sleeve element (99) adjoining on the circumferential side, a collar element (101) adjoining on the circumferential side and/or a support element (94) adjoining on the circumferential side.

11. Monopile foundation according to any one of claims 1 to 10, **characterised in that** at least one support element (74) has a cable receptacle (76) extending at least substantially radially to the foundation pile (71), in particular designed as a recess of the support element (74) or as a channel in the support element (74), for receiving the sea cable (43) extending through the feed-through opening (42) in the foundation pile (71), and, preferably, the cable receptacle (76) is provided freely accessible from the seabed (M) in a direction at least substantially parallel to the longitudinal axis of the foundation pile (71) and/or **in that** a stiffening element (117) is provided in circumferential direction between at least two adjoining support elements (114) and in radial direction between the sleeve (113) and the collar (115), connected to the at least two adjoining support elements (114) and, preferably, the sleeve (113) between the at least two adjoining support elements (114) has a shorter extension at least substantially parallel to the longitudinal axis of the foundation pile (111) than the adjoining regions of the sleeve (113).

12. Monopile foundation according to claim 11, **characterised in that** the extension of the sleeve (113) between the at least two adjoining support elements (114) relative to the adjoining regions of the sleeve (113) is in each case at least substantially parallel to the longitudinal axis of the foundation pile (111) at least substantially smaller by an amount that at least substantially corresponds to the extension of the stiffening element (117) at least substantially parallel to the longitudinal axis of the foundation pile (111).

13. Monopile foundation according to any one of claims 1 to 12, **characterised in that** at least the support (8) or a support element (124) has a cable guide (126) for guiding the sea cable (43) in the direction of the feed-through opening (42) and, preferably, the cable guide (126) has a channel-like, in particular U-shaped or V-shaped, cross-section (127) transverse to the sea cable (43) to be guided and, further preferably, the cable guide (126) is formed at least substantially by the shoulder (128) of the support (8) or the support element (124) and two laterally adjoining flank elements (129) and/or
**in that** a coolant line (131) is assigned to the sleeve (113) adjoining the recess (116) in the sleeve (113), in particular for freezing seawater, on the one hand, in a gap between the reinforcement section (VA) of the foundation pile (111) and the sleeve (113) of the foundation reinforcement (112) and, on the other hand, in a region adjoining the recess (116).

14. Monopile foundation installation for an offshore structure, in particular for a wind turbine, with a monopile foundation anchored in a seabed (M) according to any one of claims 1 to 13, wherein the foundation pile (3, 41, 61, 71, 81, 91, 111, 121) is inserted with its foundation section (GA) into the seabed (M), wherein the collar (9, 65, 75, 85, 95, 115, 125) and/or the sleeve (4, 45, 63, 73, 83, 93, 113, 123) is inserted at least partially, in particular fully, into the seabed (M).

15. Method for erecting an offshore structure, in particular for a wind turbine, with a monopile foundation according to any one of claims 1 to 13,
- in which an already existing offshore structure is removed from a foundation pile (3, 41, 61, 71, 81, 91, 111, 121) to support the structure and a new offshore structure is erected on the foundation pile,
- in which the foundation reinforcement (4, 22, 44, 62, 72, 82, 92, 112, 122) is subsequently attached to the foundation pile (3, 41, 61, 71, 81, 91, 111, 121), already partially inserted in the seabed (M), of the already existing offshore structure,
- in which the collar (9, 65, 75, 85, 95, 115, 125) and/or the sleeve (4, 45, 63, 73, 83, 93, 113, 123) of the foundation reinforcement (4, 22, 44, 62, 72, 82, 92, 112, 122) is introduced, preferably via vibration, at least partially into the seabed (M).

16. Method according to claim 15,
- in which, in the circumferential direction of the foundation pile (3, 41, 61, 71, 81, 91, 111, 121), the collars (9, 65, 75, 85, 95, 115, 125) of a plurality of, in particular of two, three or four reinforcement elements (11, 12, 20, 21, 47, 48) are introduced, preferably via vibration, at least partially into the seabed (M),
- in which the reinforcement elements (11, 12, 20, 21, 47, 48) are positioned next to one another through the at least partial introduction into the seabed (M), in particular successively, or before the at least partial introduction in the seabed (M),
- in which the sides of the adjoining reinforcement elements (11, 12, 20, 21, 47, 48) each adjacent to one another are connected to one another, preferably through the at least partial introduction into the seabed (M) or before the at least partial introduction into the seabed (M), in a form-fitting, articulated and/or force-fitting manner and
- in which the reinforcement section (VA) of the foundation pile (3, 41, 61, 71, 81, 91, 111, 121) above the seabed (M) is connected to the collar (4, 45, 63, 73, 83, 93, 113, 123) of the foundation reinforcement (4, 22, 44, 62, 72, 82, 92, 112, 122).

17. Method according to claim 15 or 16,
- in which the sides of the sleeve elements (13, 15, 29, 30, 49, 50), collar elements (14) and/or support elements (10, 52, 53, 64, 74, 84, 94, 114, 124) each adjacent to one another in the circumferential direction are connected to one another, preferably through the at least partial introduction into the seabed (M) or before the at least partial introduction into the seabed (M), in a form-fitting, articulated and/or force-fitting manner and
- in which at least two adjacent sleeve elements (13, 15, 29, 30, 49, 50) of adjacent reinforcement elements (11, 12, 20, 21, 47, 48) are positioned overlapping in sections in the circumferential direction, in particular to form a sleeve (4, 45, 63, 75) closed in the radial direction.

18. Method according to any one of claims 15 to 17,
in which the sleeve (4, 45, 63, 73, 83, 93, 113, 123), in particular the sleeve elements (13, 15, 29, 30, 49, 50), is connected to the outer side of the reinforcement section (VA) of the foundation pile (3, 41, 61, 71, 81, 91, 111, 121), which is spaced apart via a gap (6, 62), via a casting compound (7), in particular grout, introduced into the gap (6, 62), and/or
- in which the foundation reinforcement (4, 22, 44, 62, 72, 82, 92, 112, 122) is pushed onto the reinforcement section (VA) of the foundation pile (3, 41, 61, 71, 81, 91, 111, 121), which is in particular inserted in the seabed (M), and/or the foundation pile (3, 41, 61, 71, 81, 91, 111, 121), in particular when inserted in the seabed (M), is pushed through the foundation reinforcement (4, 22, 44, 62, 72, 82, 92, 112, 122), which is in particular inserted in the seabed (M) and/or
- in which a coolant, in particular for freezing seawater, on the one hand, in a gap between the reinforcement section (VA) of the foundation pile (111) and the sleeve (113) of the foundation reinforcement (112) and, on the other hand, in a region adjoining the recess (116), is led through at least one cooling line (131), and the at least one coolant line (131) is assigned to a recess (116) in the sleeve (113).

## Revendications

1. Fondation monopieu (2, 67, 77, 86, 104, 119, 130) pour une construction située en mer, notamment pour une éolienne (W), avec un pieu de fondation (3, 41, 61, 71, 81, 91, 111, 121) pour supporter la construction et un renforcement de la fondation (4, 22, 44, 62, 72, 82, 92, 112, 122) étant à relier à l'extérieur sur le pieu de fondation (3, 41, 61, 71, 81, 91, 111, 121) et conçu pour être fixé ultérieurement au pieu de fondation (3, 41, 61, 71, 81, 91, 111, 121), le renforcement de la fondation (4, 22, 44, 62, 72, 82, 92, 112, 122) présentant une manchette (4, 45, 63, 73, 83, 93, 113, 123), une bague (9, 65, 75, 85, 95, 115, 125) et au moins un support (8), la manchette (4, 45, 63, 73, 83, 93, 113, 123) étant associée au pieu de fondation (3, 41, 61, 71, 81, 91, 111, 121) et la bague (9, 65, 75, 85, 95, 115, 125) étant maintenue à l'extérieur espacée de la manchette (4, 45, 63, 73, 83, 93, 113, 123) par au moins un support (8), le pieu de fondation (3, 41, 61, 71, 81, 91, 111, 121) présentant une section de fondation (GA) à insérer dans le fond de la mer (M) et une partie de renforcement (VA) pour relier le pieu de fondation (3, 41, 61, 71, 81, 91, 111, 121) à la manchette (4, 45, 63, 73, 83, 93, 113, 123) au-dessus du fond de la mer (M) et la bague (9, 65, 75, 85, 95, 115, 125) et/ou la manchette (4, 45, 63, 73, 83, 93, 113, 123) étant conçues pour être insérées, au moins partiellement, dans le fond de la mer (M), **caractérisée en ce que** l'on prévoit une ouverture de passage (42) dans le pieu de fondation (3, 41, 61, 71, 81, 91, 111, 121) dans la zone de la section de renforcement (VA) et **en ce que** l'on prévoit la manchette (4, 45, 63, 73, 83, 93, 113, 123) du renforcement de la fondation (4, 22, 44, 62, 72, 82, 92, 112, 122) n'obturant pas l'ouverture de passage (42) dans la section de renforcement (VA).

2. Fondation monopieu selon la revendication 1, **caractérisée en ce que** le renforcement de la fondation (4, 22, 44, 62, 72, 82, 92, 112, 122) est conçu pour être enfilé sur la section de renforcement (VA) du pieu de fondation (3, 41, 61, 71, 81, 91, 111, 121) introduit dans le fond de ma mer (M) et/ou **en ce que** le pieu de fondation (3, 41, 61, 71, 81, 91, 111, 121) est conçu pour être enfoncé à travers le renforcement de la fondation (4, 22, 44, 62, 72, 82, 92, 112, 122), notamment lors de l'insertion dans le fond de la mer (M).

3. Fondation monopieu selon la revendication 1 ou 2, **caractérisée en ce que** le renforcement de la fondation (4, 22, 44, 62, 72, 82, 92, 112, 122) comporte, dans la direction périphérique du pieu de fondation (3, 41, 61, 71, 81, 91, 111, 121), plusieurs, notamment deux, trois ou quatre, éléments de renforcement (11, 12, 20, 21, 47, 48) à agencer côte à côte, et **en ce que** respectivement les côtés adjacents dans la direction périphérique des éléments de renforcement (11, 12, 20, 21, 47, 48) sont conçus pour être reliés les uns aux autres par complémentarité de forme, articulée et/ou de force et **en ce que**, de préférence, chaque élément de renforcement (11, 12, 20, 21, 47, 48) présente un élément de manchette (13, 15, 29, 30, 49, 50) de la manchette (4, 45, 63, 73, 83, 93, 113, 123), un élément de bague(14) de la bague (9, 65, 75, 85, 95, 115, 125) et au moins un élément de support (10, 52, 53, 64, 74, 84, 94, 114, 124) du support (8) et **en ce que**, mieux encore, les côtés des éléments de manchette (13, 15, 29, 30, 49, 50), des éléments de bague (14) et/ou des éléments de support (10, 52, 53, 64, 74, 84, 94, 114, 124) respectivement adjacents l'un à l'autre dans la direction périphérique sont conçus pour être reliés les uns aux autres par complémentarité de forme, articulée et/ou de force.

4. Fondation monopieu selon l'une des revendications 1 à 3 **caractérisée en ce que** la manchette (4, 45, 63, 73, 83, 93, 113, 123), notamment les éléments de manchette (13, 15, 29, 30, 49, 50), est conçue pour une liaison avec le côté extérieur de la section de renforcement (VA) du pieu de fondation (3, 41, 61,71, 81, 91, 111, 121) par le biais d'un raccordement à mastic (GV), prévu dans un interstice (6, 62, 79) entre la manchette (4, 45, 63, 73, 83, 93, 113, 123), notamment les éléments de manchette (13, 15, 29, 30, 49, 50), et le côté extérieur de la section de renforcement (VA) et/ou **en ce qu'**au moins deux éléments de manchette (13, 15, 29, 30, 49, 50) adjacents des éléments de renforcement (11, 12, 20, 21, 47, 48) adjacents sont conçus en chevauchement par sections dans la direction périphérique et/ou **en ce que** les éléments de manchette (13, 15, 29, 30, 49, 50) sont conçus pour la formation d'une manchette (4, 45, 63, 73, 83, 93, 113, 123) fermée dans la direction radiale.

5. Fondation monopieu selon l'une des revendications 1 à 4, **caractérisée en ce qu'**au moins un support (8), notamment au moins un élément de support (10, 52, 53, 64, 74, 84, 94, 114, 124), est conçu sous la forme d'une nervure ou d'une entretoise et **en ce que**, de préférence, les éléments de support (10, 52, 53, 64, 74, 84, 94, 114, 124) adjacents des éléments de renforcement (11, 12, 20, 21, 47, 48) adjacents sont conçus respectivement pour un engrènement par complémentarité de forme, articulée et/ou de force et, **en ce que**, mieux encore, un élément de support (10, 52, 53, 64, 74, 84, 94, 114, 124) des éléments de support (10, 52, 53, 64, 74, 84, 94, 114, 124) adjacents, présente au moins une section d'accrochage (16, 24) et respectivement l'autre élément de support (10, 52, 53, 64, 74, 84, 94, 114, 124) présente au moins une section d'engagement (17, 26) conçue pour l'engrènement dans au moins une section d'accrochage (16, 24).

6. Fondation monopieu selon l'une des revendications 3 à 5, **caractérisée en ce que** les éléments de manchette (49, 50) adjacents sont à une certaine distance les uns des autres dans la zone d'au moins une ouverture de passage (42) dans le pieu de fondation (3, 41, 61, 71, 81, 91, 111, 121).

7. Fondation monopieu selon l'une des revendications 1 à 6, **caractérisée en ce que** la manchette (63) présente un trou oblong (66), en alignement avec l'ouverture de passage (42) prévu dans le pieu de fondation pour le passage d'un câble sous-marin (43) et, de préférence, le trou oblong (66) s'étend dans sa direction longitudinale au moins sensiblement parallèle à l'axe longitudinal du pieu de fondation (61) et/ou
**en ce que** la manchette (73,83,93,113), dans la zone de l'ouverture de passage (42) dans le pieu de fondation (71, 81, 91, 111), ainsi qu'en dessous, est évidée côté périphérie et, de préférence, **en ce que** la manchette (73, 83, 93, 113), au-dessus de l'ouverture de passage (42) dans le pieu de fondation (71, 81, 91, 111), est fermée côté périphérie et/ou
**en ce que** la bague (75, 85, 95) est évidée, au moins par sections, en dessous de l'ouverture de passage (42) dans le pieu de fondation (71, 81, 91) côté périphérie et, de préférence, **en ce que** la bague (75, 85, 95), notamment au-dessus de l'évidement (78, 88, 102), est fermé côté périphérie.

8. Fondation monopieu selon l'une des revendications 1 à 7, **caractérisée en ce que** la manchette (93) présente, dans une zone située en dessous de l'ouverture de passage (42) dans le pieu de fondation (91) côté périphérie, une section de montage (97) pouvant être déplacée d'une position de montage à une position de renforcement et retour, **en ce que** la section de montage (97) dans la position de montage rend l'ouverture de passage (42) dans le pieu de fondation (91) librement accessible depuis le fond de la mer (M) dans une direction au moins sensiblement parallèle à l'axe longitudinal du pieu de fondation (91) et **en ce que** la section de montage (97), dans la position de renforcement, est reliée à deux éléments de manchette (99) opposés, côté périphérie, notamment ferme la manchette (93), côté périphérie, entre les deux éléments de manchette (99) opposés, côté périphérie.

9. Fondation monopieu selon l'une des revendications 1 à 8, **caractérisée en ce que** la bague (95) présente côté périphérie une section de montage (100) pouvant être déplacée d'une position de montage à une position de renforcement et retour, **en ce que** la section de montage (100) est reliée, dans la position de renforcement, à deux éléments de bague (101) opposés côté périphérie, notamment ferme la bague (95) côté périphérie entre les deux éléments de bague (101) opposés côté périphérie, et **en ce que** la section de montage (100) forme, dans la position de montage, dans une direction au moins sensiblement parallèle à l'axe longitudinal du pieu de fondation (91), une ouverture librement accessible dans la bague depuis le fond de la mer (M).

10. Fondation monopieu selon la revendication 8 ou 9, **caractérisée en ce que** la section de montage (97) de la manchette (93) et/ou de la section de montage (100) de la bague (95) est conçue pivotée, rabattue et/ou repliée pour le déplacement de la position de montage à la position de renforcement et retour, et/ou **en ce que** la section de montage (97) de la manchette (93) et/ou la section de montage (100) de la bague (95) est fixée, dans la position de montage, au moins à un élément de manchette (99) adjacent côté périphérie, à un élément de bague (101) adjacent côté périphérie et/ou à un élément de support (94) adjacent côté périphérie.

11. Fondation monopieu selon l'une des revendications 1 à 10, **caractérisée en ce qu'**au moins un élément de support (74) présente un logement de câbles (76) s'étendant au moins sensiblement radialement par rapport au pieu de fondation (71), notamment réalisé sous forme d'évidement de l'élément de support (74) ou de canal dans l'élément de support (74), pour accueillir le câble sous-marin (43) s'étendant à travers l'ouverture de passage (42) dans le pieu de fondation (71) et, de préférence, l'on prévoit le logement de câble (76) librement accessible depuis le fond de la mer (M) dans une direction au moins sensiblement parallèle à l'axe longitudinal du pieu de fondation (71) et/ou **en ce que** l'on prévoit, dans la direction périphérique, entre au moins deux éléments de support (114) adjacents et dans la direction radiale entre la manchette (113) et la bague (115), un élément raidisseur (117) relié à au moins deux éléments de support (114) adjacents, et, de préférence, la manchette (113) présente, entre au moins lesdits deux éléments de support (114) adjacents, une extension plus faible, au moins sensiblement parallèle à l'axe longitudinal du pieu de fondation (111), que les zones adjacentes de la manchette (113).

12. Fondation monopieu selon la revendication 11, **caractérisée en ce que** l'extension de la manchette (113) entre au moins lesdits deux éléments de support (114) adjacents est au moins sensiblement inférieure par rapport aux zones adjacentes de la manchette (113), respectivement au moins sensiblement parallèle à l'axe longitudinal du pieu de fondation (111), d'une valeur qui correspond au moins sensiblement à l'extension de l'élément raidisseur (117) au moins sensiblement parallèle à l'axe longitudinal du pieu de fondation (111).

13. Fondation monopieu selon l'une des revendications 1 à 12, **caractérisée en ce qu'**au moins le support (8) ou un élément de support (124) présente un chemin de câble (126) pour guider le câble sous-marin (43) en direction de l'ouverture de passage (42) et, de préférence, le chemin de câble (126) présente une section transversale en forme de rigole, notamment en forme de U ou de V (127) perpendiculaire au câble sous-marin (43) à guider, et, mieux encore, le chemin de câble (126) est au moins essentiellement formé par l'épaulement (128) du support (8) ou de l'élément de support (124) et par deux éléments de flanc (129) qui se raccordent latéralement et/ou
**en ce qu'**une conduite de liquide de refroidissement (131) est associée à la manchette (113) adjacente à l'évidement (116) dans la manchette (113), notamment pour congeler l'eau de mer, d'une part, dans un interstice entre la section de renforcement (VA) du pieu de fondation (111) et la manchette (113) du renforcement de la fondation (112) et, d'autre part, dans une zone adjacente à l'évidement (116).

14. Installation de fondations monopieux pour une construction située en mer, notamment pour une éolienne, avec une fondation monopieu ancrée dans un fond de la mer (M) selon l'une des revendications 1 à 13, le pieu de fondation (3, 41, 61, 71, 81, 91, 111, 121) étant inséré, avec sa section de fondation (GA), dans le fond de la mer (M), la bague (9, 65, 75, 85, 95, 115, 125) et/ou la manchette (4, 45, 63, 73, 83, 93, 113, 123) étant insérée, au moins partiellement, notamment intégralement, dans le fond de la mer (M).

15. Procédé pour ériger une construction située en mer, notamment pour une éolienne, avec une fondation monopieu selon l'une des revendications 1 à 13,
- dans lequel une construction située en mer déjà existante est retirée d'un pieu de fondation (3,41,61,71,81,91,111,121) pour supporter la construction et une nouvelle construction située en mer est érigée sur le pieu de fondation,
- dans lequel le renforcement de la fondation (4,22,44,62,72,82,92,112,122) est placé ultérieurement sur le pieu de fondation (3,41,61,71,81,91,111,121) déjà installé dans le fond de la mer (M) de la construction située en mer déjà existante,
- dans lequel la bague (9, 65, 75, 85, 95, 115, 125) et/ou la manchette (4, 45, 63, 73, 83, 93, 113, 123) du renforcement de la fondation (4, 22, 44, 62, 72, 82, 92, 112, 122) est introduit, de préférence par vibration, au moins partiellement, dans le fond de la mer (M).

16. Procédé selon la revendication 15,
- dans lequel dans la direction périphérique du pieu de fondation (3, 41, 61, 71, 81, 91, 111, 121), les bagues (9, 65, 75, 85, 95, 115, 125) de plusieurs, notamment deux, trois ou quatre, éléments de renforcement (11, 12, 20, 21, 47, 48), sont introduits, au moins partiellement, dans le fond de la mer (M), de préférence par vibrations,
- dans lequel les éléments de renforcement (11, 12, 20, 21, 47, 48) sont positionnés côte à côte par le biais d'une insertion, au moins partielle, dans le fond de la mer (M), notamment l'un après l'autre, ou avant l'introduction, au moins partielle, dans le fond de la mer (M),
- dans lequel les côtés adjacents des éléments de renforcement (11, 12, 20, 21, 47, 48) adjacents, de préférence par le biais d'une insertion, au moins partielle, dans le fond de la mer (M) ou avant l'insertion, au moins partielle, dans le fond de la mer (M), sont reliés entre eux par complémentarité de forme, articulée et/ou de force, et
- dans lequel la section de renforcement (VA) du pieu de fondation (3, 41, 61, 71, 81, 91, 111, 121) au-dessus du fond de la mer (M) est reliée à la manchette (4, 45, 63, 73, 83, 93, 113, 123) du renforcement de la fondation (4, 22, 44, 62, 72, 82, 92, 112, 122).

17. Procédé selon la revendication 15 ou 16,
- dans lequel les côtés respectivement adjacents entre eux dans la direction périphérique, des éléments de manchette (13, 15, 29, 30, 49, 50), des éléments de bague (14) et/ou des éléments de support (10,52,53,64,74,84,94,114,124) sont reliés les uns aux autres, de préférence par l'insertion, au moins partielle, dans le fond de la mer (M) ou avant l'insertion, au moins partielle, dans le fond de la mer (M), par complémentarité de forme, articulée et/ou de force et
- dans lequel au moins deux éléments de manchette (13, 15, 29, 30, 49, 50) adjacents d'éléments de renforcement (11, 12, 20, 21, 47, 48) adjacents sont positionnés en chevauchement, par sections, dans la direction périphérique, notamment pour la formation d'une manchette (4, 45, 63, 75) fermée dans la direction radiale.

18. Procédé selon l'une des revendications 15 à 17,
dans lequel la manchette (4, 45, 63, 73, 83, 93, 113, 123), notamment les éléments de manchette (13, 15, 29, 30, 49, 50), est reliée, avec le côté extérieur de la section de renforcement (VA) du pieu de fondation (3, 41, 61, 71, 81, 91, 111, 121), espacé par un interstice (6, 62), par une masse de scellement (7), notamment du mastic, qui est introduite dans l'interstice (6, 62) et/ou
- dans lequel le renforcement de la fondation (4, 22, 44, 62, 72, 82, 92, 112, 122) est enfilée sur la section de renforcement (VA) du pieu de fondation (3, 41, 61, 71, 81, 91, 111, 121), notamment inséré dans le fond de la mer (M), et/ou le pieu de fondation (3, 41, 61, 71, 81, 91, 111, 121), notamment lors de son insertion dans le fond de la mer (M), est enfoncé par le renforcement de la fondation (4, 22, 44, 62, 72, 82, 92, 112, 122), notamment enfiché dans le fond de la mer (M), et/ou
- dans lequel un liquide de refroidissement, notamment pour la congélation de l'eau de mer, est acheminé d'une part dans un interstice entre la section de renforcement (VA) du pieu de fondation (111) et la manchette (113) du renforcement de la fondation (112) et d'autre part dans une zone adjacente à l'évidement (116), à travers au moins une conduite de refroidissement (131) et ladite au moins une conduite de liquide de refroidissement (131) est associée à un évidement (116) dans la manchette (113).
